(19) Europäisches Patentamt
European Patent Office
Office européen des brevets

(11) **EP 3 197 833 B1**

(12) **FASCICULE DE BREVET EUROPEEN**

(45) Date de publication et mention de la délivrance du brevet:
**08.05.2019  Bulletin 2019/19**

(21) Numéro de dépôt: **15771557.4**

(22) Date de dépôt: **22.09.2015**

(51) Int Cl.:
*C01F 17/00* [(2006.01)]       *C22B 3/26* [(2006.01)]
*C22B 3/28* [(2006.01)]       *C22B 7/00* [(2006.01)]
*C22B 59/00* [(2006.01)]

(86) Numéro de dépôt international:
**PCT/EP2015/071679**

(87) Numéro de publication internationale:
**WO 2016/046179 (31.03.2016 Gazette 2016/13)**

(54) **PROCÉDÉS DE RÉCUPÉRATION SÉLECTIVE DE TERRES RARES PRÉSENTES DANS DES PHASES AQUEUSES ACIDES ISSUES DU TRAITEMENT D'AIMANTS PERMANENTS USAGÉS OU REBUTÉS**

VERFAHREN ZUR SELEKTIVEN RÜCKGEWINNUNG VON SELTENERDMETALLEN IN SAUREN WÄSSRIGEN PHASEN AUS DER BEHANDLUNG VON VERBRAUCHTEN ODER VERSCHROTTETEN PERMANENTMAGNETEN

PROCESSES FOR SELECTIVE RECOVERY OF RARE EARTH METALS PRESENT IN ACIDIC AQUEOUS PHASES RESULTING FROM THE TREATMENT OF SPENT OR SCRAPPED PERMANENT MAGNETS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **24.09.2014  FR 1459023**

(43) Date de publication de la demande:
**02.08.2017  Bulletin 2017/31**

(73) Titulaire: **Commissariat à l'Énergie Atomique et aux Énergies Alternatives
75015 Paris (FR)**

(72) Inventeurs:
• **MIGUIRDITCHIAN, Manuel**
  **F-84000 Avignon (FR)**
• **HAQUIN, Victor**
  **F-30200 Bagnols sur Ceze (FR)**
• **PACARY, Vincent**
  **F-30330 Gaujac (FR)**
• **LAUCOURNET, Richard**
  **F-38500 La Buisse (FR)**
• **MONTUIR, Marc**
  **F-84230 Chateauneuf-du-Pape (FR)**

(74) Mandataire: **Brevalex
95, rue d'Amsterdam
75378 Paris Cedex 8 (FR)**

(56) Documents cités:
**EP-A1- 2 592 068     FR-A1- 2 810 679
FR-A1- 2 907 346     FR-A1- 2 997 095**

• **HIROKAZU NARITA ET AL: "Separation of Rare Earth Elements from Base Metals in Concentrated $HNO_3$, $H_2SO_4$ and HCI Solutions with Diglycolamide", SOLVENT EXTRACTION RESEARCH AND DEVELOPMENT, JAPAN, vol. 20, 2 mars 2013 (2013-03-02), pages 115-121, XP055190781, ISSN: 1341-7215, DOI: 10.15261/serdj.20.115 cité dans la demande**

**Description**

**DOMAINE TECHNIQUE**

L'invention relève du domaine de la récupération des terres rares présentes dans des aimants permanents usagés ou rebutés en vue du recyclage de ces terres rares.

Plus spécifiquement, l'invention se rapporte à un procédé hydrométallurgique permettant de récupérer sélectivement au moins une terre rare « lourde », c'est-à-dire de numéro atomique au moins égal à 62 (samarium, europium, gadolinium, terbium, dysprosium, holmium, erbium, thulium et/ou ytterbium), se trouvant dans une phase aqueuse acide issue du traitement d'aimants permanents usagés ou rebutés.

Elle se rapporte également à un procédé hydrométallurgique permettant de récupérer sélectivement, non seulement au moins une terre rare lourde présente dans une phase aqueuse acide issue du traitement d'aimants permanents usagés ou rebutés, mais également au moins une terre rare « légère », c'est-à-dire de numéro atomique au plus égal à 61 (scandium, yttrium, lanthane, cérium, praséodyme et/ou néodyme), se trouvant également dans cette phase aqueuse acide.

L'invention trouve une application particulièrement intéressante dans le recyclage des terres rares contenues dans des aimants permanents de type Néodyme-Fer-Bore (ou NdFeB) usagés ou rebutés et, en particulier, du dysprosium (qui est la terre rare lourde présente dans ce type d'aimants qui est la plus intéressante économiquement), du praséodyme et du néodyme (qui sont les terres rares les plus abondantes dans ce type d'aimants), ainsi que dans le recyclage du samarium contenue dans des aimants permanents de type Samarium-Cobalt (ou SmCo) usagés ou rebutés.

**ÉTAT DE LA TECHNIQUE ANTÉRIEURE**

Les propriétés physiques et chimiques particulières des terres rares (scandium, yttrium et lanthanides) en font actuellement des éléments chimiques indispensables dans de nombreux domaines industriels : industries du verre et des céramiques, catalyse, métallurgie, fabrication d'aimants permanents, de dispositifs optiques, de luminophores, etc.

Cette spécificité, conjuguée à une croissance de la demande mondiale en terres rares ainsi qu'à un nombre limité de pays producteurs de terres rares, engendrent des risques d'approvisionnement des marchés de ces métaux.

La diversification dans la production des terres rares fait actuellement l'objet d'une forte attention de la part des acteurs concernés. Le recyclage des terres rares présentes dans des matériaux usagés ou rebutés est de plus en plus privilégié. Jusqu'en 2011, moins de 1% de ces terres rares était recyclé. Le recyclage permet de concilier diminution des risques d'approvisionnement et défis environnementaux liés aux activités minières.

Un des premiers marchés en volume et en valeur marchande de recyclage des terres rares concerne les aimants permanents de type NdFeB. Cette ressource pour le recyclage des terres rares présente l'avantage de comprendre des proportions en terres rares intéressantes et valorisables. En effet, les teneurs massiques en terres rares de ces aimants sont de l'ordre 30% pour environ 70% de fer. La composition des aimants NdFeB varie selon les applications et les fabricants mais ils contiennent typiquement des terres rares lourdes (dysprosium et, à un degré moindre, gadolinium, terbium) très valorisables ainsi que des terres rares légères (praséodyme et néodyme notamment). Outre de contenir du fer et du bore, les aimants NdFeB sont généralement recouverts d'une enveloppe protectrice anticorrosion à base de nickel et de cuivre ou d'autres métaux de transition (cobalt, chrome, etc.).

Le problème est donc de parvenir à récupérer, à partir d'aimants permanents contenant une proportion importante de fer, du bore et diverses impuretés (cobalt, nickel, cuivre, titane, manganèse, chrome, etc) en quantités pondérales, des terres rares telles que le dysprosium, le praséodyme et le néodyme, avec des puretés finales suffisantes pour permettre le recyclage de ces terres rares (que ce soit sous la forme d'aimants ou dans d'autres applications) et idéalement supérieures à 99,5%.

La voie hydrométallurgique, basée sur la technique d'extraction liquide-liquide, est communément considérée comme une des voies les plus appropriées commercialement pour récupérer les terres rares à partir du milieu dans lequel elles se trouvent et surtout les séparer les unes des autres.

Les procédés hydrométallurgiques, qui sont actuellement utilisés industriellement pour récupérer les terres rares à partir d'une phase aqueuse acide, emploient préférentiellement des extractants organophosphorés comme des acides phosphoriques, des acides phosphoniques, des acides phosphiniques, des acides carboxyliques et des phosphates d'alkyles. Il s'agit, par exemple, de l'acide di-2-éthylhexylphosphorique (ou HDEHP), de l'acide 2-éthylhexyl-2-éthylhexylphosphonique (ou HEH[EHP]), de l'acide bis(triméthyl-2,4,4-pentyl)phosphinique (ou Cyanex 272), de l'acide néodécanoïque (ou Versatic 10) et du tri-*n*-butylphosphate (ou TBP).

Toutefois, l'utilisation de ces extractants n'est pas adaptée à la récupération des terres rares présentes dans une phase aqueuse acide issue du traitement d'aimants permanents NdFeB car ils ont tous l'inconvénient d'extraire fortement le fer ainsi que les autres métaux de transition. Leur utilisation nécessiterait donc d'éliminer les métaux de transition de la phase aqueuse avant d'en extraire les terres rares, ce qui conduirait à un procédé lourd à mettre en oeuvre et donc peu intéressant industriellement.

Les diglycolamides représentent une famille d'extractants qui a été développée par une équipe japonaise dans le cadre d'études sur le traitement de combustibles nucléaires usés dans le but de co-extraire les actinides trivalents et les lanthanides à partir d'un raffinat du procédé PUREX.

Des études sur l'extraction de nombreux éléments de la classification périodique de Mendeleiev ont également été publiées, mais l'utilisation des diglycolamides en tant qu'extractants, reste étroitement liée au traitement des combustibles nucléaires usés et, en particulier, à la récupération des actinides trivalents (américium et curium) présents dans ces combustibles.

L'utilisation d'un diglycolamide, en l'espèce le *N,N'*-diméthyl-*N,N'*-di-*n*-octyldiglycolamide (ou MODGA), comme extractant pour récupérer les terres rares à partir de solutions aqueuses acides issues de rebuts d'aimants permanents NdFeB a néanmoins été envisagée très récemment dans un article publié par Narita et Tanaka (Solvent Extraction Research and Development, Japan, 2013, 20, 115-121, référence **[1]**).

Cet article montre qu'il est possible de séparer le néodyme et le dysprosium du fer et du nickel ainsi que le dysprosium du néodyme en milieu nitrique ou sulfurique au moyen d'une phase organique comprenant du MODGA. Toutefois, les travaux sur lesquels il est basé reposent uniquement sur des solutions aqueuses synthétiques qui renferment seulement 0,001 mol/L de dysprosium, de néodyme, de fer et de nickel, soit des concentrations très éloignées de celles attendues dans une solution aqueuse issue du traitement d'aimants permanents usagés ou rebutés. Ainsi, aucun test n'a été effectué sur des solutions aqueuses réellement obtenues à partir d'aimants permanents et, donc, susceptibles de contenir jusqu'à 600 fois plus de fer ou 60 fois plus de néodyme par exemple, que les solutions aqueuses synthétiques qu'ils ont utilisées.

Par ailleurs, cet article ne précise pas le comportement et l'impact des autres éléments métalliques pouvant également se trouver dans une solution aqueuse acide issue du traitement d'aimants permanents NdFeB tels que le praséodyme, le bore, le cobalt et le cuivre.

Enfin, aucun schéma d'un procédé qui permettrait de récupérer, à une échelle industrielle, le dysprosium et, éventuellement le praséodyme et le, à la fois quantitativement et sélectivement n'est proposé dans cet article qui se cantonne uniquement à des expériences en tubes.

Compte-tenu de ce qui précède, les Inventeurs se sont donc fixé pour but de fournir un procédé qui permette de récupérer une ou plusieurs terres rares présentes dans une phase aqueuse acide issue du traitement d'aimants permanents usagés ou rebutés et, en particulier, d'aimants permanents NdFeB et ce, de manière sélective vis-à-vis des éléments non-terres rares susceptibles d'être également présents dans cette phase aqueuse de sorte que la ou les terres rares ainsi récupérées puissent présenter, ensemble ou séparément, un degré de pureté élevé, idéalement supérieur à 99,5%.

Ils se sont aussi fixé pour but que ce procédé permette de récupérer cette ou ces terres rares avec un rendement de récupération élevé, idéalement supérieur à 99,5%.

Ils se sont également fixé pour but que ce procédé soit applicable à des phases aqueuses issues du traitement d'aimants permanents dont l'acidité puisse s'inscrire dans une large gamme.

Ils se sont en outre fixé pour but que ce procédé soit suffisamment simple à mettre en oeuvre pour que son exploitation à une échelle industrielle puisse être raisonnablement envisagée.

## EXPOSÉ DE L'INVENTION

Ces buts et d'autres encore sont atteints par l'invention qui propose tout d'abord un procédé (dénommé ci-après « premier procédé ») de récupération sélective d'au moins une terre rare TR1, de numéro atomique au moins égal à 62, à partir d'une phase aqueuse acide A1 issue du traitement d'aimants permanents usagés ou rebutés et comprenant une ou plusieurs terre(s) rare(s) TR1, des métaux de transition et une concentration en acide fort allant de 0,2 mol/L à 6 mol/L, lequel procédé comprend :

a) l'extraction de la (des) terre(s) rare(s) TR1 de la phase aqueuse A1, par mise en contact de la phase aqueuse A1 avec une phase organique non-miscible à l'eau, qui comprend un diglycolamide lipophile, c'est-à-dire ayant un nombre total d'atomes de carbone au moins égal à 24, comme extractant, dans un diluant organique, puis séparation des phases aqueuse et organique ;

b) le lavage de la phase organique obtenue à l'issue de l'étape a), par mise en contact de la phase organique avec une phase aqueuse acide A2, qui comprend un acide fort identique à l'acide fort de la phase aqueuse A1, à une concentration au plus égale à la concentration en acide fort de la phase aqueuse A1, puis séparation des phases aqueuse et organique ; et

c) la désextraction de la (des) terre(s) rare(s) TR1 de la phase organique obtenue à l'issue de l'étape b), par mise en contact de la phase organique avec une phase aqueuse acide A3 qui présente un pH au moins égal à 3, puis séparation des phases aqueuse et organique.

Dans ce qui précède et ce qui suit, on entend par aimants permanents « usagés », tous les aimants permanents susceptibles d'être récupérés à partir de déchets post-consommation industriels ou domestiques et, notamment de déchets d'équipements électriques et électroniques (encore appelés « DEEE » ou « D3E ») tels que disques durs d'ordinateurs, moteurs électriques, dispositifs magnétiques (scanners, haut-parleurs de téléviseurs, ...), etc, tandis que l'on entend par aimants permanents « rebutés », tous les rebuts de la fabrication d'aimants permanents et ce, qu'il s'agisse de poudres, de copeaux ou d'éléments plus massifs.

Par ailleurs, dans ce qui précède et ce qui suit, les expressions « de .... à .... » et « entre .... et .... » sont équivalentes lorsqu'elles sont appliquées à des gammes, telles que des gammes de concentrations ou de pH, et entendent signifier que les bornes de ces gammes sont incluses dans lesdites gammes.

De même, les termes « solution » et « phase » sont équivalents et parfaitement interchangeables.

Conformément à l'invention, le diglycolamide est avantageusement choisi parmi les diglycolamides qui répondent à la formule (I) ci-après :

$$R^1(R^2)N\text{-}C(O)\text{-}CH_2\text{-}O\text{-}CH_2\text{-}C(O)\text{-}N(R^3)R^4 \qquad (I)$$

dans laquelle $R^1$, $R^2$, $R^3$ et $R^4$ représentent, indépendamment les uns des autres, des groupes alkyles, linéaires ou ramifiés, comprenant chacun au moins 5 atomes de carbone et, de préférence, au moins 8 atomes de carbone tels que des groupes *n*-octyles, 2-éthyl-hexyles, *n*-nonyles, *n*-décyles, *n*-undécyles, *n*-dodécyles, *n*-tridécyles, *n*-tétradécyles, etc.

Parmi ces diglycolamides, on préfère plus particulièrement les diglycolamides de formule (I) ci-avant dans laquelle $R^1$, $R^2$, $R^3$ et $R^4$ représentent des groupes alkyles identiques entre eux et comprenant de 8 à 12 atomes de carbone.

À titre d'exemples de tels diglycolamides, on peut citer le *N,N,N',N'*-tétraoctyl-3-oxapentanediamide (ou TODGA), le *N,N,N',N'*-tétra(2-éthylhexyl)-3-oxapentanediamide (ou TEHDGA), le *N,N,N',N'*-tétradécyl-3-oxapentanediamide (ou TDDGA) ou encore le *N,N,N',N'*-tétradodécyl-3-oxapentanediamide (ou TdDDGA).

Selon une disposition particulièrement préférée de l'invention, le diglycolamide est choisi parmi le TODGA, le TEHDGA et le TdDDGA et, mieux encore, parmi le TODGA et le TdDDGA.

Quoi qu'il en soit, le diglycolamide est présent dans la phase organique à une concentration allant typiquement de 0,05 mol/L à 1 mol/L et, de préférence, de 0,05 mol/L à 0,4 mol/L, cette concentration étant, par exemple, de 0,2 mol/L.

La phase organique peut comprendre de plus un modificateur de phase propre à augmenter leur capacité de charge, c'est-à-dire la concentration maximale en éléments métalliques que peut présenter cette phase sans que se produise la formation d'une troisième phase par démixtion lorsqu'elle est mise en contact avec une phase aqueuse chargée en éléments métalliques. Un tel modificateur de charge sera généralement indiqué dans le cas d'une phase organique comprenant un diglycolamide de formule (I) ci-avant dans laquelle $R^1$ à $R^4$ représentent des groupes alkyles ayant moins de 12 atomes de carbone tel que le TODGA ou le TEHDGA.

Ce modificateur de phase peut notamment être choisi parmi les phosphates de trialkyles tels que le tri-*n*-butylphosphate (ou TBP) ou le tri-*n*-hexyl-phosphate (ou THP), les alcools tels que le *n*-octanol, le *n*-décanol ou l'isodécanol, et les monoamides tels que le *N,N*-dihexyloctanamide (ou DHOA), le *N,N*-dibutyldécanamide (ou DBDA), le *N,N*-di(2-éthylhexyl)acétamide (ou D2EHAA), le *N,N*-di(2-éthylhexyl)-propionamide (ou D2EHPA), le *N,N*-di(2-éthylhexyl)isobutyramide (ou D2EHiBA) ou le *N,N*-dihexyldécanamide (ou DHDA).

Par ailleurs, ce modificateur de phase ne représente, de préférence, pas plus de 15% en volume du volume de la phase organique, voire pas plus de 10% en volume du volume de cette phase lorsqu'il s'agit d'un alcool comme le n-octanol.

Quant au diluant organique, il peut s'agir de tout diluant organique aliphatique non polaire dont l'utilisation a été proposée pour la réalisation d'extractions liquide-liquide comme un dodécane, linéaire ou ramifié, tel que le *n*-dodécane ou le tétrapropylène hydrogéné (ou TPH), ou un kérosène tel que celui commercialisé par la société TOTAL sous la référence commerciale Isane IP-185.

Comme précédemment indiqué, la phase aqueuse A2 présente une concentration en acide fort au plus égale à la concentration en acide fort de la phase aqueuse A1, ce qui signifie qu'elle peut être inférieure ou égale à cette concentration. Toutefois, pour des raisons d'efficacité du lavage, on utilise, de préférence, une phase aqueuse A2 dont la concentration en acide fort est inférieure à celle de la phase aqueuse A1. Cette concentration se situe typiquement entre 0,01 mol/L et 0,5 mol/L en fonction de l'acidité de la phase aqueuse A1 et du rapport de volumes ou de débits O/A (organique/aqueux) utilisé à l'étape b). Elle est, de préférence, égale à 0,01 mol/L d'acide fort.

Conformément à l'invention, l'acide fort présent dans la phase aqueuse A1 et, par conséquent, dans la phase aqueuse A2 (puisque, comme précédemment mentionné, cette dernière comprend le même acide fort que la phase aqueuse A1) est de, préférence, l'acide nitrique. Toutefois, il va de soi qu'il pourrait tout aussi bien s'agir d'acide sulfurique, d'acide chlorhydrique ou d'acide phosphorique, voire d'un mélange de plusieurs acides forts tels que précités.

La phase aqueuse A3 présente typiquement un pH compris entre 3 et 4 et, de préférence, égal à 3. Cette phase aqueuse peut comprendre comme acide, un acide fort et, qui plus est, le même acide fort que celui présent dans les phases aqueuses A1 et A2, par exemple l'acide nitrique, auquel cas elle comprend typiquement de 0,0001 mol/L à 0,001 mol/L et, de préférence, 0,001 mol/L de cet acide fort. Toutefois, il est également possible que la phase aqueuse A3 comprenne comme acide, un acide faible, par exemple un acide mono-, di- ou tricarboxylique tel que l'acide glycolique, l'acide malonique ou l'acide mésoxalique.

Pour favoriser la désextraction de la (des) terre(s) rare(s) TR1 de la phase organique issue de l'étape b), l'étape c) est, de préférence, réalisée à chaud, c'est-à-dire typiquement à une température allant de 40°C à 55°C. En complément ou en variante, la phase aqueuse A3 peut comprendre de plus un ou plusieurs composés complexant les terres rares en milieu aqueux, lequel(s) composé(s) peut (peuvent) notamment être choisi(s) parmi les diglycolamides hydrophiles, c'est-à-dire dont le nombre total d'atomes de carbone ne dépasse pas 20, comme le *N,N,N',N'*-tétraméthyldiglycolamide (ou TMDGA), le *N,N,N',N'*-tétraéthyldiglycolamide (ou TEDGA) ou le *N,N,N',N'*-tétrapropyldiglycolamide (ou TPDGA), les acides polyaminocarboxyliques comme l'acide *N*-(2-hydroxyéthyl)éthylène diamine triacétique (ou HEDTA), l'acide nitrilotriacétique (ou NTA) ou l'acide diéthylène triamine pentaacétique (ou DTPA), ou encore parmi les acides mono-, di- ou tricarboxyliques comme l'acide glycolique, l'acide malonique ou l'acide mésoxalique dans le cas, bien entendu, où ladite phase aqueuse A3 ne comprend pas déjà comme acide, un tel acide mono-, di- ou tricarboxylique.

Avantageusement, le premier procédé comprend de plus une étape de purification de la phase organique issue de l'étape c), laquelle purification peut comprendre, comme cela est bien connu en soi, un lavage de cette phase organique par une ou plusieurs phases aqueuses acides, alcalines et/ou complexantes, capables de désextraire les impuretés et les éventuels produits de dégradation (notamment, les produits d'hydrolyse) qu'elle contient sans pour autant désextraire le diglycolamide. Auquel cas, ce procédé est mis en oeuvre sous la forme d'un cycle formé par les étapes a), b), c) et la purification de la phase organique issue de l'étape c).

Conformément à l'invention, le premier procédé, tel qu'il vient d'être décrit, est de préférence mis en oeuvre pour récupérer le dysprosium (Z = 66) contenu dans des aimants permanents NdFeB usagés ou rebutés, auquel cas la phase aqueuse A1 est issue du traitement d'aimants permanents de ce type et comprend du dysprosium en tant que terre rare TR1.

Toutefois, ce procédé peut également être mis en oeuvre pour récupérer sélectivement le samarium (Z = 62) contenu dans des aimants permanents SmCo usagés ou rebutés, auquel cas la phase aqueuse A1 est issue du traitement d'aimants permanents de ce type et comprend du samarium en tant que terre rare TR1.

Il peut de plus être mis en oeuvre dans un procédé plus complexe permettant de récupérer sélectivement, non seulement une ou plusieurs terres rares lourdes contenues dans des aimants permanents usagés ou rebutés, mais également une ou plusieurs terres rares légères contenues dans ces aimants et, donc, être intégré dans ce procédé.

Aussi, l'invention a-t-elle également pour objet un procédé (dénommé ci-après « deuxième procédé ») de récupération sélective d'au moins une terre rare TR1, de numéro atomique au moins égal à 62, et d'au moins une terre rare TR2, de numéro atomique au plus égal à 61, à partir d'une phase aqueuse acide A1 issue du traitement d'aimants permanents usagés ou rebutés et comprenant une ou plusieurs terre(s) rare(s) TR1 et une ou plusieurs terre(s) rare(s) TR2, des métaux de transition et une concentration en acide fort allant de 0,2 mol/L à 6 mol/L.

Dans un premier mode de mise en oeuvre de ce deuxième procédé, celui-ci comprend, d'une part, la récupération sélective de la (des) terre(s) rare(s) TR1 à partir de la phase aqueuse A1 par la mise en oeuvre des étapes a), b) et c) précédemment décrites, et, d'autre part, la récupération sélective de la (des) terre(s) rare(s) TR2 à partir de la phase aqueuse obtenue à l'issue de l'étape a) par la mise en oeuvre de trois étapes additionnelles, respectivement ci-après d), e) et f).

En d'autres termes, dans ce premier mode de mise en oeuvre, le deuxième procédé comprend :

- la récupération de la (des) terre(s) rare(s) TR1 présente(s) dans la phase aqueuse A1, laquelle récupération comprend les étapes suivantes :

   a) l'extraction de la (des) terre(s) rare(s) TR1 de la phase aqueuse A1, par mise en contact de la phase aqueuse A1 avec une première phase organique non-miscible à l'eau, qui comprend un diglycolamide ayant un nombre total d'atomes de carbone au moins égal à 24 comme extractant, dans un diluant organique, puis séparation des phases aqueuse et organique ;
   b) le lavage de la phase organique obtenue à l'issue de l'étape a), par mise en contact de la phase organique avec une phase aqueuse acide A2, qui comprend un acide fort identique à l'acide fort de la phase aqueuse A1, à une concentration au plus égale à la concentration en acide fort de la phase aqueuse A1, puis séparation des phases aqueuse et organique ; et
   c) la désextraction de la (des) terre(s) rare(s) TR1 de la phase organique obtenue à l'issue de l'étape b), par mise en contact de la phase organique avec une phase aqueuse acide A3 qui présente un pH au moins égal à 3, puis séparation des phases aqueuse et organique ; et

- la récupération de la (des) terre(s) rare(s) TR2 présente(s) dans la phase aqueuse obtenue à l'issue de l'étape a), laquelle récupération comprend les étapes suivantes :

d) l'extraction de la (des) terre(s) rare(s) TR2 de la phase aqueuse obtenue à l'issue de l'étape a), par mise en contact de la phase aqueuse avec une deuxième phase organique, non miscible à l'eau, qui comprend le même extractant que la première phase organique, dans un diluant organique, puis séparation des phases aqueuse et organique ;

e) le lavage de la phase organique obtenue à l'issue de l'étape d), par mise en contact de la phase organique avec une phase aqueuse acide A4, qui comprend un acide fort identique à l'acide fort de la phase aqueuse A1, à une concentration au plus égale à la concentration en acide fort de la phase aqueuse issue de l'étape a), puis séparation des phases aqueuse et organique ; et

f) la désextraction de la (des) terre(s) rare(s) TR2 de la phase organique obtenue à l'issue de l'étape e), par mise en contact de la phase organique avec une phase aqueuse acide A5 qui présente un pH au moins égal à 3, puis séparation des phases aqueuse et organique.

Dans ce premier mode de mise en oeuvre, les caractéristiques préférées du diglycolamide, de la première phase organique et des phases aqueuses A2 et A3 sont telles que précédemment décrites pour le premier procédé.

Par ailleurs, tout ce qui a été précédemment mentionné à propos de la phase organique du premier procédé s'applique également à la deuxième phase organique.

Comme précédemment indiqué, la phase aqueuse A4 présente une concentration en acide fort au plus égale à la concentration en acide fort de la phase aqueuse A1, ce qui signifie qu'elle peut être inférieure ou égale à cette concentration. Toutefois, pour des raisons d'efficacité du lavage, on utilise, de préférence, une phase aqueuse A4 dont la concentration en acide fort est inférieure à celle de la phase aqueuse A1. Cette concentration se situe typiquement entre 0,2 mol/L et 4 mol/L en fonction de l'acidité de la phase aqueuse issue de l'étape a) et du rapport de volumes ou de débits O/A utilisé à l'étape e). Elle est, de préférence, égale à 1 mol/L d'acide fort.

La phase aqueuse A5 présente typiquement un pH compris entre 3 et 4 et, de préférence, égal à 3. Cette phase aqueuse peut comprendre comme acide, un acide fort et, qui plus est, le même acide fort que celui présent dans les phases aqueuses A1, A2 et A4, par exemple l'acide nitrique, auquel cas elle comprend typiquement de 0,0001 mol/L à 0,001 mol/L et, de préférence, 0,001 mol/L de cet acide fort. Toutefois, il est également possible que la phase aqueuse A5 comprenne comme acide, un acide faible du type de ceux précités.

Là également, la désextraction de la (des) terre(s) rare(s) TR2 de la phase organique issue de l'étape e) peut être favorisée en réalisant l'étape f) à chaud, c'est-à-dire typiquement à une température allant de 40°C à 55°C, et/ou en ajoutant à la phase aqueuse A5 un ou plusieurs composés complexant les terres rares en milieu aqueux du type de ceux précités.

Dans ce premier mode de mise en oeuvre, le procédé comprend avantageusement de plus une purification des phases organiques issues des étapes c) et f). Auquel cas, le procédé est, de préférence, mis en oeuvre sous la forme d'un premier et d'un deuxième cycle, le premier cycle étant formé par les étapes a), b), c) et la purification de la phase organique issue de l'étape c) et le deuxième cycle étant formé par les étapes d), e), f) et la purification de la phase organique issue de l'étape f).

Plus encore, on préfère que le procédé soit mis en oeuvre sous la forme d'un premier et d'un deuxième cycle utilisant la même phase organique, auquel cas le premier cycle comprend les étapes a), b) et c), le deuxième cycle comprend les étapes d), e) et f), les premier et deuxième cycles ayant en commun de comprendre une purification d'une phase organique formée par la réunion des phases organiques issues des étapes c) et f) puis une division de la phase organique ainsi purifiée en lesdites première et deuxième phases organiques.

Dans un deuxième mode de mise en oeuvre du deuxième procédé, celui-ci comprend les étapes a), b) et c) précédemment décrites mais, outre que l'étape a) vise à extraire la (les) terre(s) rare(s) TR2 en plus de la (des) terre(s) rare(s) TR1, le procédé comprend, entre les étapes b) et c), deux étapes additionnelles, respectivement ci-après b') et b"), qui visent :

- pour la première, à désextraire la (les) terre(s) rare(s) TR2 de la phase organique obtenue à l'issue de l'étape b) au moyen d'une phase aqueuse acide ; et
- pour la deuxième, à laver la phase aqueuse acide obtenue à l'issue de cette désextraction pour en retirer la (les) terre(s) rare(s) TR1 susceptible(s) d'avoir été désextraite(s) conjointement avec la (les) terre(s) rare(s) TR2 ;

moyennant quoi, à l'étape c), la (les) terre(s) rare(s) TR1 est (sont) désextraite(s) de la phase organique obtenue à l'issue de l'étape b') et non pas de celle obtenue à l'étape b).

En d'autres termes, dans ce deuxième mode de mise en oeuvre, le deuxième procédé comprend :

a) l'extraction de la (des) terre(s) rare(s) TR1 et de la (des) terre(s) rare(s) TR2 de la phase aqueuse A1, par mise en contact de la phase aqueuse A1 avec une première phase organique non-miscible à l'eau, qui comprend un diglycolamide ayant un nombre total d'atomes de carbone au moins égal à 24 comme extractant, dans un diluant organique, puis séparation des phases aqueuse et organique ;

b) le lavage de la phase organique obtenue à l'issue de l'étape a), par mise en contact de la phase organique avec une phase aqueuse acide A2, qui comprend un acide fort identique à l'acide fort de la phase aqueuse A1, à une concentration au plus égale à la concentration en acide fort de la phase aqueuse A1, puis séparation des phases aqueuse et organique ;

b') la désextraction de la (des) terre(s) rare(s) TR2 de la phase organique obtenue à l'issue d'étape b), par mise en contact de la phase organique avec une phase aqueuse acide A5 qui présente un pH allant de 1 à 2,3, puis séparation des phases organique et aqueuse ;

b") le lavage de la phase aqueuse obtenue à l'issue de l'étape b'), par mise en contact de la phase aqueuse avec une deuxième phase organique, non miscible à l'eau, qui comprend le même extractant que la première phase organique, dans un diluant organique, puis séparation des phases aqueuse et organique ; et

c) la désextraction de la (des) terre(s) rares(s) TR1 de la phase organique obtenue à l'issue de l'étape b'), par mise en contact de la phase organique avec une phase aqueuse acide A3 qui présente un pH au moins égal à 3, puis séparation des phases aqueuse et organique.

Dans ce deuxième mode de mise en oeuvre, les caractéristiques préférées du diglycolamide, de la première phase organique et de la phase aqueuse A3 sont, là encore, telles que précédemment décrites pour le premier procédé.

Par ailleurs, tout ce qui a été précédemment mentionné à propos de la phase organique du premier procédé s'applique également à la deuxième phase organique.

Par contre, la phase aqueuse A2 présente une concentration en acide fort se situant typiquement entre 0,2 mol/L et 4 mol/L en fonction de l'acidité de la phase aqueuse A1 et du rapport de volumes ou de débits O/A utilisé à l'étape b). Cette concentration est, de préférence, égale à 1 mol/L d'acide fort.

La phase aqueuse A5 présente, elle, avantageusement un pH égal à 2. Comme précédemment, cette phase aqueuse peut comprendre comme acide, un acide fort et, qui plus est, le même acide fort que celui présent dans les phases aqueuses A1 et A2, par exemple l'acide nitrique, auquel cas elle comprend de 0,005 mol/L à 0,1 mol/L et, de préférence, 0,01 mol/L de cet acide fort. Là également, la phase aqueuse A5 peut comprendre un acide faible en lieu et place d'un acide fort.

Comme précédemment, la phase aqueuse A5 peut aussi comprendre un ou plusieurs composés complexant les terres rares en milieu aqueux du type de ceux précités. Par contre, l'étape b') est, de préférence, réalisée à température ambiante pour éviter que ne se produise une désextraction trop importante de la (des) terre(s) rare(s) TR1 conjointement avec la désextraction de la (des) terre(s) rare(s) TR2.

Dans ce deuxième mode de mise en oeuvre, le procédé comprend avantageusement de plus une purification de la phase organique issue de l'étape c). Auquel cas, le procédé est, de préférence, mis en oeuvre sous la forme d'un cycle formé par les étapes a), b), b'), b"), c) et la purification de la phase organique issue de l'étape c).

Quel que soit le mode de mise en oeuvre du deuxième procédé, l'acide fort est aussi, de préférence, l'acide nitrique, étant entendu qu'il pourrait tout aussi bien s'agir d'un autre acide fort comme l'acide sulfurique, l'acide chlorhydrique ou l'acide phosphorique, voire d'un mélange de plusieurs acides forts tels que ceux précités.

Par ailleurs, quel que soit le mode de mise en oeuvre du deuxième procédé, celui-ci est de préférence mis à profit pour récupérer sélectivement le dysprosium, le praséodyme (Z = 59) et le néodyme (Z = 60) contenus dans des aimants permanents NdFeB usagés ou rebutés, auquel cas la phase aqueuse A1 est issue du traitement d'aimants permanents de ce type et comprend du dysprosium en tant que terre rare TR1, et du praséodyme et du néodyme en tant que terres rares TR2.

Qu'il s'agisse d'aimants permanents NdFeB ou d'aimants permanents d'un autre type, la phase aqueuse A1 peut notamment être issue de la dissolution d'une poudre d'aimants permanents dans un acide fort supplémenté en un agent oxydant tel que le peroxyde d'hydrogène, comme décrit dans la demande internationale PCT WO 2014/064597, ci-après référence **[2],** la poudre d'aimants permanents pouvant, elle-même, être obtenue par démagnétisation et broyage d'aimants permanents puis traitement d'hydruration-déshydruration du broyat ainsi obtenu, comme également décrit dans la dite référence **[2].**

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

## BRÈVE DESCRIPTION DES FIGURES

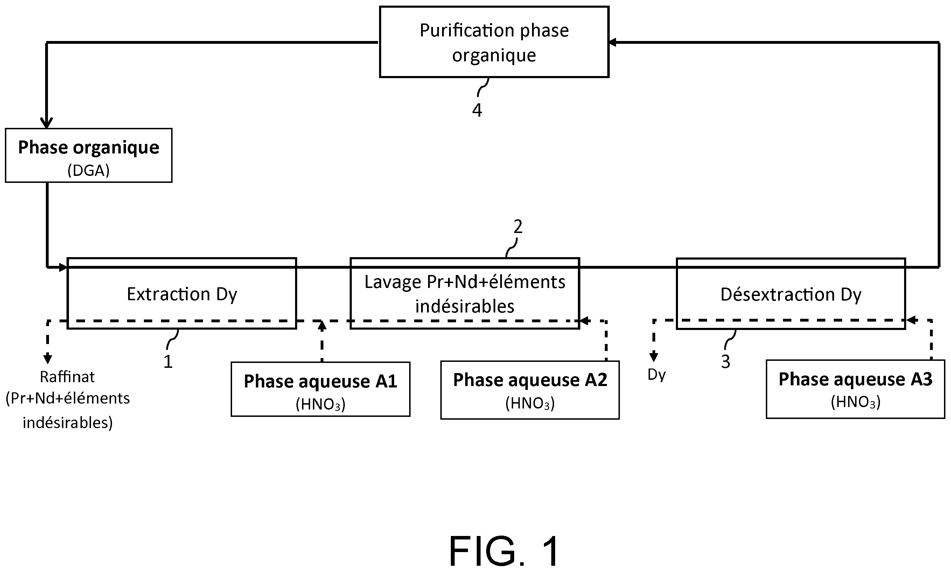

La figure 1 illustre le principe d'un mode de mise en oeuvre préféré du premier procédé de l'invention, appliqué au traitement, à une échelle industrielle, d'une phase aqueuse nitrique issue du traitement d'aimants permanents NdFeB usagés ou rebutés, en vue de récupérer sélectivement le dysprosium présent dans cette phase aqueuse.

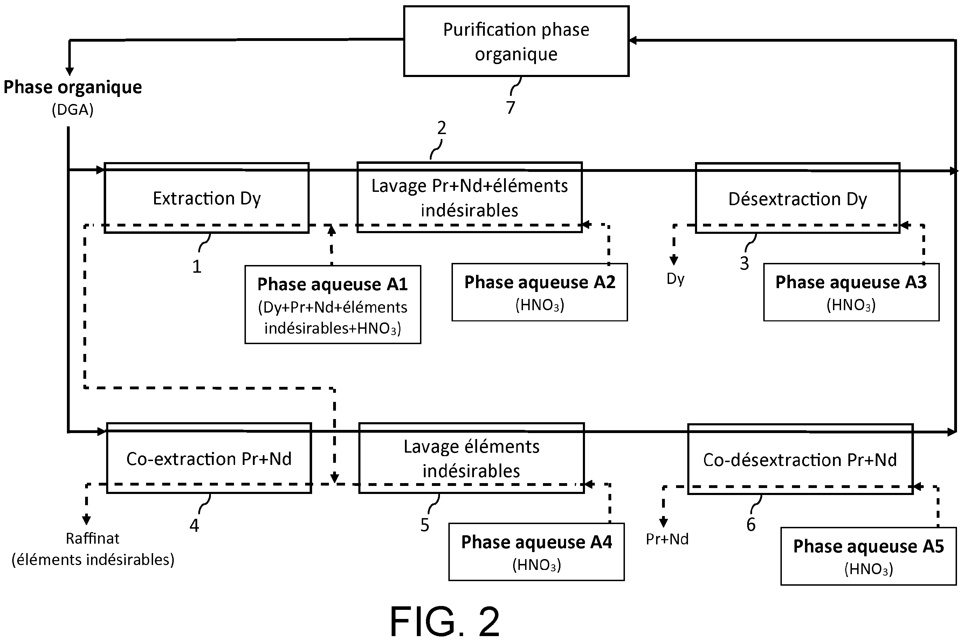

La figure 2 illustre le principe d'un premier mode de mise en oeuvre préféré du deuxième procédé de l'invention, appliqué au traitement, à une échelle industrielle, d'une phase aqueuse nitrique issue du traitement d'aimants permanents NdFeB usagés ou rebutés, en vue de récupérer sélectivement le dysprosium, le praséodyme et le néodyme présents dans cette phase aqueuse.

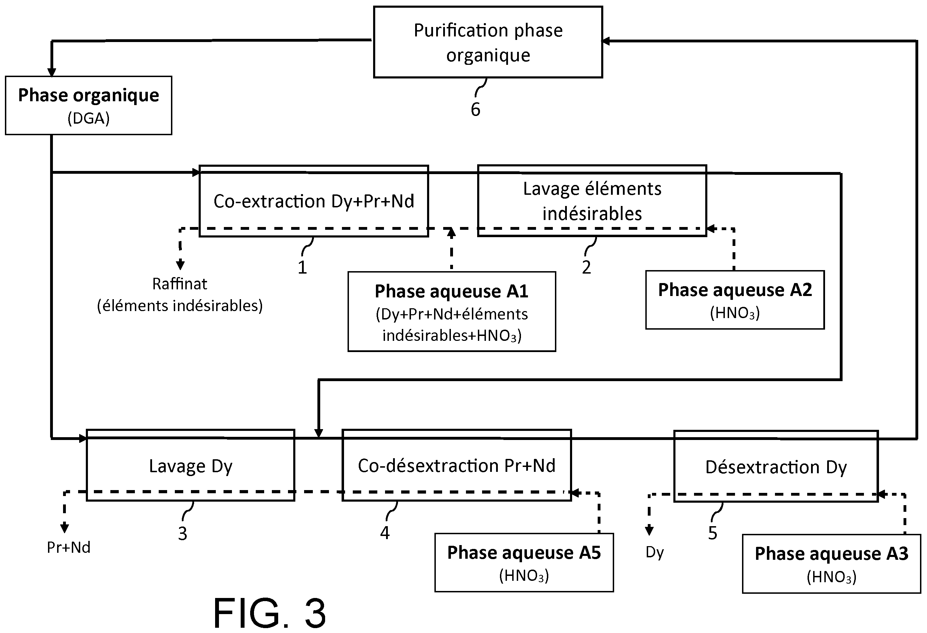

La figure 3 illustre le principe d'un deuxième mode de mise en oeuvre préféré du deuxième procédé de l'invention, appliqué au traitement, à une échelle industrielle, d'une phase aqueuse nitrique issue du traitement d'aimants permanents NdFeB usagés ou rebutés, en vue de récupérer sélectivement le dysprosium, le praséodyme et le néodyme présents dans cette phase aqueuse.

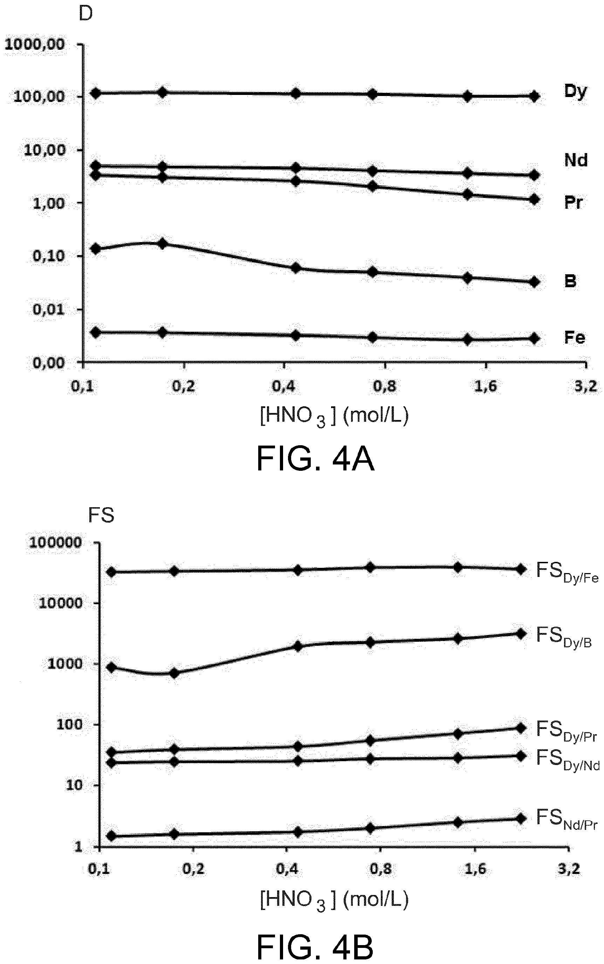

Les figures 4A et 4B illustrent les résultats de tests d'extraction réalisés sur des phases aqueuses nitriques synthétiques, comprenant du bore, du fer, du dysprosium, du praséodyme et du néodyme, et en utilisant des phases organiques comprenant 0,2 mol/L de TODGA, 5% (v/v) de n-octanol dans du n-dodécane ; la figure 4A montre les coefficients de distribution, notés $D_M$, des différents éléments métalliques obtenus en fonction de la concentration en acide nitrique, exprimée en mol/L, des phases aqueuses testées tandis que la figure 4B montre les facteurs de séparation, respectivement notés $FS_{Dy/Nd}$, $FS_{Dy/Pr}$, $FS_{Dy/B}$ et $FS_{Dy/Fe}$, entre le dysprosium et les autres éléments métalliques ainsi que le facteur de séparation, noté $FS_{Nd/Pr}$, entre le néodyme et le praséodyme, obtenus en fonction de la concentration en acide nitrique, exprimée en mol/L, des phases aqueuses testées.

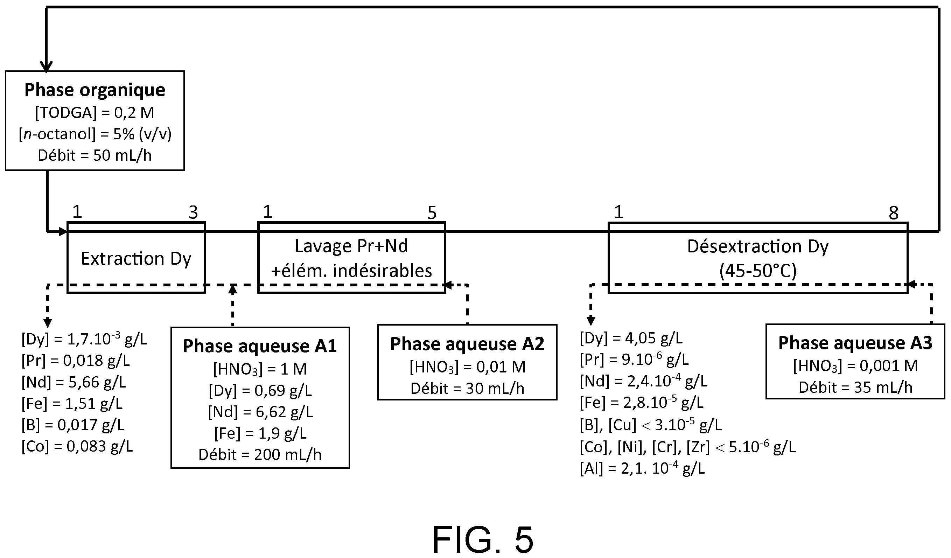

La figure 5 illustre le schéma ayant été utilisé pour tester, en mélangeurs-décanteurs, le mode de mise en oeuvre préféré du premier procédé de l'invention illustré sur la figure 1.

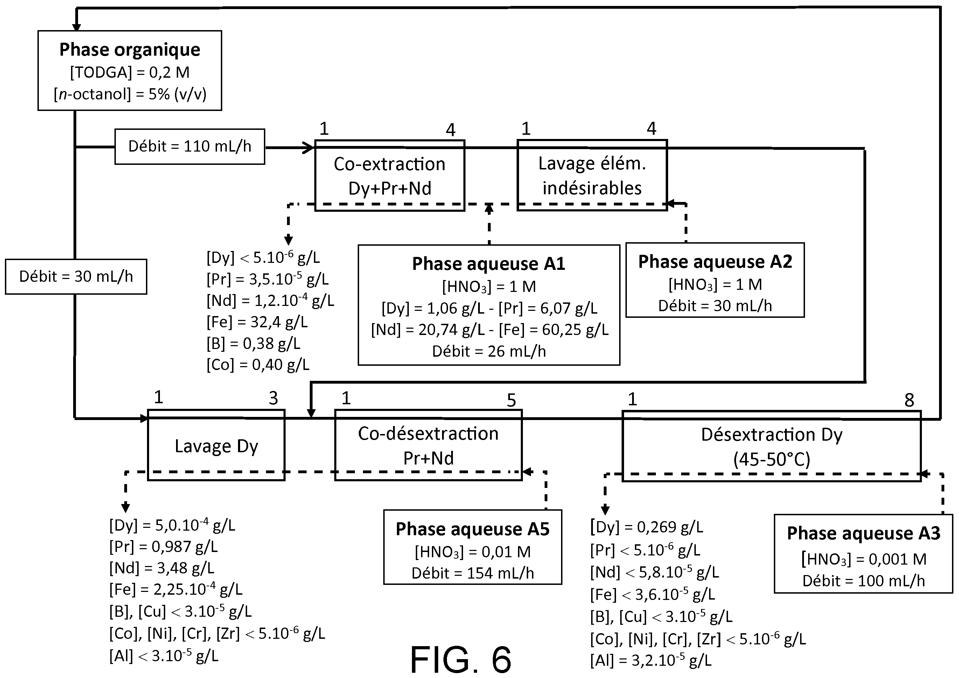

La figure 6 illustre le schéma ayant été utilisé pour tester, en mélangeurs-décanteurs, le deuxième mode de mise en oeuvre préféré du deuxième procédé de l'invention illustré sur la figure 3.

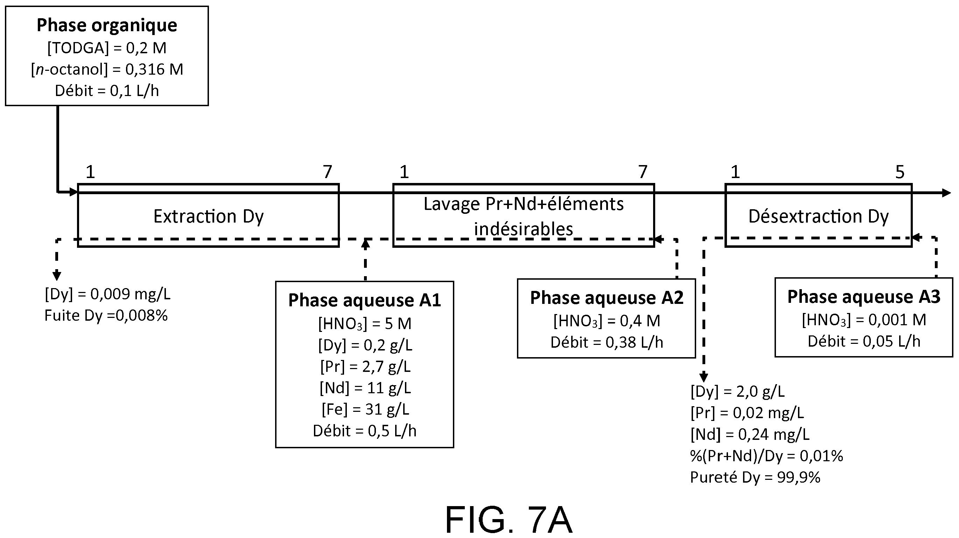

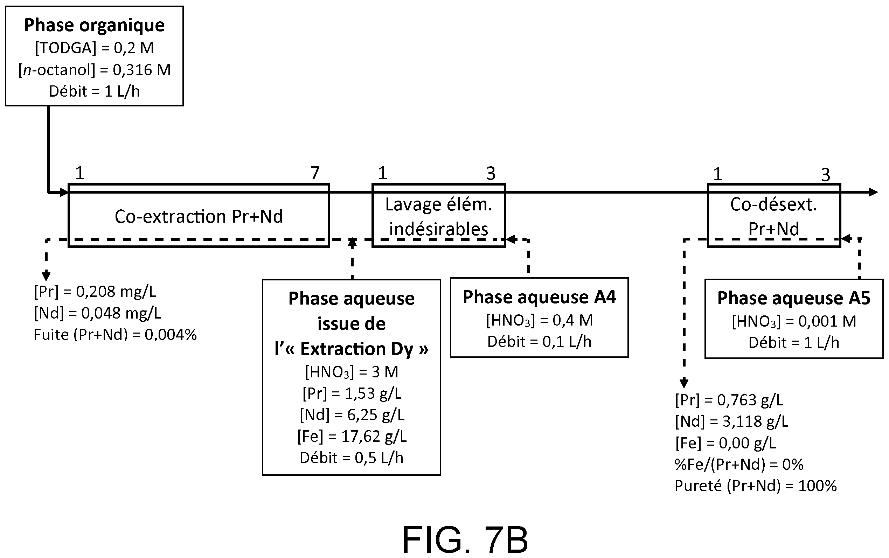

Les figures 7A et 7B illustrent un schéma susceptible d'être utilisé pour le premier mode de mise en oeuvre préféré du deuxième procédé de l'invention qui est illustré sur la figure 2 ; la figure 7A correspond aux étapes du premier cycle de ce mode de mise en oeuvre hormis l'étape de la purification de la phase organique tandis que la figure 7B correspond aux étapes du deuxième cycle dudit mode de mise en oeuvre hormis, là également, l'étape de purification de la phase organique.

Sur les figures 1 à 3, les rectangles référencés 1 à 7 représentent des extracteurs multi-étagés tels que ceux qui sont classiquement utilisés pour réaliser des extractions liquide-liquide à une échelle industrielle comme, par exemple, des extracteurs constitués de batteries de mélangeurs-décanteurs.

Par ailleurs, sur les figures 1 à 3 et 5 à 7B, les flux de phase organique entrant et sortant de ces extracteurs sont symbolisés par un trait continu alors que les flux de phase aqueuse entrant et sortant desdits extracteurs sont symbolisés par des traits en pointillés.

## EXPOSÉ DÉTAILLÉ DE L'INVENTION

### EXEMPLE 1: Schéma de principe d'un mode de mise en oeuvre préféré du premier procédé de l'invention

On se réfère à la figure 1 qui illustre le principe d'un mode de mise en oeuvre préféré du premier procédé de l'invention, conçu pour traiter, à une échelle industrielle, une phase aqueuse nitrique issue du traitement d'aimants permanents NdFeB usagés ou rebutés, en vue de récupérer sélectivement le dysprosium qui est, des terres rares lourdes présentes dans cette phase aqueuse, la plus intéressante économiquement.

Cette phase aqueuse est, par exemple, une phase aqueuse issue de la dissolution en milieu nitrique, supplémenté en un agent oxydant, d'une poudre d'aimants permanents NdFeB telle qu'obtenue dans la référence **[2]** précitée.

Une telle phase aqueuse, qui est dénommée ci-après et sur la figure 1 « Phase aqueuse A1 », peut comprendre, selon le type d'aimants à partir duquel elle a été obtenue et des conditions dans lesquelles la poudre d'aimants a été dissoute en milieu nitrique : de 0,2 mol/L à 6 mol/L d'acide nitrique, du dysprosium, du praséodyme, du néodyme, du fer et un certain nombre d'impuretés métalliques telles que du bore, du nickel, du cuivre, du cobalt, du chrome, de l'aluminium, du zirconium etc. Ce fer et ces impuretés seront regroupés, dans ce qui suit, sous le terme « éléments indésirables ».

Dans le présent mode de mise en oeuvre, le procédé comprend un seul cycle qui vise à récupérer sélectivement le dysprosium présent dans la phase aqueuse A1.

Ce cycle comprend :

- une première étape, dénommée « Extraction Dy » sur la figure 1, qui vise à extraire le dysprosium de la phase aqueuse A1 au moyen d'une phase organique, non miscible à l'eau ;
- une deuxième étape, dénommée « Lavage Pr+Nd+éléments indésirables » sur la figure 1, qui vise à laver la phase organique issue de l'« Extraction Dy » au moyen d'une phase aqueuse acide A2 pour retirer de cette phase organique les éléments métalliques autres que le dysprosium qui sont susceptibles d'avoir été partiellement extraits lors de l'« Extraction Dy » ;
- une troisième étape, dénommée « Désextraction Dy » sur la figure 1, qui vise à désextraire le dysprosium de la phase organique issue du « Lavage Pr+Nd+éléments indésirables » au moyen d'une phase aqueuse acide A3 ; et
- une quatrième étape, dénommée « Purification phase organique » sur la figure 1, qui vise à soumettre la phase organique issue de la « Désextraction Dy » à une série de traitements permettant de purifier cette phase pour sa réutilisation dans un cycle ultérieur.

Concrètement, l'« Extraction Dy » est réalisée dans l'extracteur 1 en mettant la phase aqueuse A1 entrant dans cet extracteur plusieurs fois en contact, à contre-courant, avec la phase organique qui comprend un diglycolamide (noté DGA sur la figure 1) en solution dans un diluant organique.

Comme précédemment indiqué, le diglycolamide est choisi parmi les diglycolamides lipophiles, c'est-à-dire dont le nombre total d'atomes de carbone est au moins égal à 24 et, plus particulièrement, parmi les diglycolamides qui répondent à la formule : $R^1(R^2)N\text{-}C(O)\text{-}CH_2\text{-}O\text{-}CH_2\text{-}C(O)\text{-}N(R^3)R^4$ dans laquelle $R^1$ à $R^4$ représentent des groupes alkyles, linéaires ou ramifiés, comprenant chacun au moins 5 atomes de carbone et, mieux encore, au moins 8 atomes de carbone, préférence étant donnée aux diglycolamides dans lesquels $R^1$ à $R^4$ représentent des groupes alkyles identiques entre eux, comprenant de 8 à 12 atomes de carbone.

Ce diglycolamide est, par exemple, le TODGA, le TEHDGA ou le TdDDGA que l'on utilise à une concentration allant typiquement de 0,05 mol/L à 1 mol/L, de préférence de 0,05 mol/L à 0,4 mol/L, cette concentration étant, par exemple, de 0,2 mol/L.

La phase organique peut comprendre de plus, notamment lorsque les groupes alkyles $R^1$ à $R^4$ du diglycolamide comprennent moins de 12 atomes de carbone, un modificateur de phase propre à éviter la formation d'une troisième phase, par exemple du n-octanol ($CH_3(CH_2)_6CH_2OH$), auquel cas ce dernier ne représente, de préférence, pas plus de 10% en volume du volume de la phase organique.

Quant au diluant organique, il s'agit, par exemple, d'un diluant aliphatique tel que le n-dodécane, le TPH ou un kérosène tel que l'Isane IP-185.

La phase organique sortant de l'extracteur 1, qui est chargée en dysprosium, est dirigée vers l'extracteur 2 dévolu au « Lavage Pr+Nd+éléments indésirables » tandis que la phase aqueuse sortant de l'extracteur 1 (dénommée « raffinat » sur la figure 1) est dirigée vers une unité de traitement des effluents aqueux du procédé.

Le « Lavage Pr+Nd+éléments indésirables » est réalisé dans l'extracteur 2 en mettant la phase organique entrant dans cet extracteur plusieurs fois en contact, à contre-courant, avec la phase aqueuse A2 qui comprend de l'acide nitrique à une concentration qui est au plus égale à la concentration en acide nitrique de la phase aqueuse A1 mais qui est, de préférence, inférieure à cette concentration, chaque mise en contact étant suivie d'une séparation des phases aqueuse et organique. Typiquement, la concentration en acide nitrique de la phase aqueuse A2 va de 0,01 mol/L à 0,5 mol/L selon la concentration en acide nitrique de la phase aqueuse A1 et est, de préférence, égale à 0,01 mol/L.

La phase organique sortant de l'extracteur 2 est dirigée vers l'extracteur 3 dévolu à la « Désextraction Dy » tandis que la phase aqueuse sortant de l'extracteur 2 est renvoyée vers l'extracteur 1 où elle rejoint la phase aqueuse A1 et s'ajoute à elle.

La « Désextraction Dy » est réalisée dans l'extracteur 3 en mettant la phase organique entrant dans cet extracteur plusieurs fois en contact, à contre-courant, avec la phase aqueuse A3 qui comprend de l'acide nitrique comme acide et dont la concentration en acide nitrique est au plus égale à 0,001 mol/L, typiquement comprise entre 0,0001 mol/L et 0,001 mol/L et, de préférence, égale à 0,001 mol/L, chaque mise en contact étant suivie d'une séparation des phases aqueuse et organique, et en chauffant, de préférence, l'extracteur 3, typiquement à une température allant de 40°C à 55°C.

Pour faciliter la désextraction du dysprosium, la phase aqueuse A3 peut comprendre, outre de l'acide nitrique, un ou plusieurs composés complexant les terres rares en milieu aqueux tels qu'un diglycolamide hydrophile, c'est-à-dire dont le nombre total d'atomes de carbone ne dépasse pas 20, comme le TMDGA, le TEDGA ou le TPDGA, un acide polyaminocarboxylique comme l'HEDTA, le NTA ou le DTPA, ou un acide mono-, di- ou tricarboxylique comme l'acide glycolique, l'acide malonique ou l'acide mésoxalique.

À l'issue de la « Désextraction Dy », on obtient une phase aqueuse qui ne contient plus que du dysprosium comme élément métallique, et une phase organique qui est dirigée vers l'extracteur 4 dévolu à la « Purification phase organique » pour subir une série de traitements (lavages acides, lavages alcalins, lavages complexants, etc) propres à la débarrasser des éventuels produits de dégradation, notamment d'hydrolyse, et éléments métalliques résiduels qu'elle renferme.

**EXEMPLE 2 : Schéma de principe d'un premier mode de mise en oeuvre préféré du deuxième procédé de l'invention**

On se réfère à présent à la figure 2 qui illustre le principe d'un premier mode de mise en oeuvre préféré du deuxième procédé de l'invention, dans lequel ce procédé est conçu pour traiter, à une échelle industrielle, une phase aqueuse acide A1 similaire à celle traitée dans l'exemple 1 ci-avant mais en vue de récupérer sélectivement, non seulement le dysprosium mais également le praséodyme et le néodyme, et ce, en deux cycles, à savoir : un premier cycle qui vise à récupérer sélectivement le dysprosium présent dans la phase aqueuse A1 et un deuxième cycle qui vise, lui, à récupérer sélectivement le praséodyme et le néodyme présents dans le raffinat du premier cycle.

Le premier cycle comprend :

- une première étape, dénommée « Extraction Dy » sur la figure 2, qui vise à extraire le dysprosium de la phase aqueuse A1 au moyen d'une première phase organique, non miscible à l'eau ;
- une deuxième étape, dénommée « Lavage Pr+Nd+éléments indésirables » sur la figure 2, qui vise à laver la phase organique issue de l'« Extraction Dy » au moyen d'une phase aqueuse acide A2 pour retirer de cette phase organique les éléments métalliques autres que le dysprosium qui sont susceptibles d'avoir été partiellement extraits lors de l'« Extraction Dy » ;
- une troisième étape, dénommée « Désextraction Dy » sur la figure 2, qui vise à désextraire le dysprosium de la phase organique issue du « Lavage Pr+Nd+éléments indésirables » au moyen d'une phase aqueuse acide A3 ;

tandis que le deuxième cycle comprend :

- une première étape, dénommée « Co-extraction Pr+Nd » sur la figure 2, qui vise à extraire le praséodyme et le néodyme de la phase aqueuse issue de l'« Extraction Dy » au moyen d'une deuxième phase organique présentant la même composition, à la fois qualitative et quantitative, que la première phase organique ;
- une deuxième étape, dénommée « Lavage éléments indésirables » sur la figure 2, qui vise à laver la phase organique issue de la « Co-extraction Pr+Nd » au moyen d'une phase aqueuse acide A4 pour retirer de cette phase organique les éléments métalliques autres que le praséodyme et le néodyme qui sont susceptibles d'avoir été partiellement extraits lors de la « Co-extraction Pr+Nd » ; et
- une troisième étape, dénommée « Co-désextraction Pr+Nd » sur la figure 2, qui vise à désextraire le praséodyme et le néodyme de la phase organique issue du « Lavage éléments indésirables » au moyen d'une phase aqueuse acide A5.

Les premier et deuxième cycles comprennent, en outre, une étape commune, dénommée « Purification phase organique » sur la figure 2, qui les lie l'un à l'autre et qui vise à soumettre la phase organique formée par la réunion des phases organiques issues respectivement de la « Désextraction Dy » et de la « Co-désextraction Pr+Nd » à une série de traitements permettant de purifier cette phase pour sa réutilisation, après division en deux, dans des premier et deuxième cycles ultérieurs.

Les étapes « Extraction Dy », « Lavage Pr+Nd+éléments indésirables », « Désextraction Dy » et « Purification phase organique » sont réalisées, respectivement dans les extracteurs 1, 2, 3 et 7, de la même façon que dans l'exemple 1.

Par contre, à la différence de l'exemple 1, la phase aqueuse sortant de l'extracteur 1 est dirigée vers l'extracteur 4 dévolu à la « Co-extraction Pr+Nd » au lieu d'être dirigée vers une unité de traitement des effluents aqueux du procédé.

La « Co-extraction Pr+Nd » est réalisée en mettant la phase aqueuse entrant dans l'extracteur 4 plusieurs fois en contact, à contre-courant, avec la deuxième phase organique, chaque mise en contact étant suivie d'une séparation des phases aqueuse et organique. Une augmentation de la concentration en acide nitrique de la phase aqueuse issue de l'« Extraction Dy » peut être réalisée, avant l'entrée ou lors de l'entrée de cette phase aqueuse dans l'extracteur 4, pour favoriser l'extraction du praséodyme et du néodyme par le diglycolamide.

La phase organique sortant de l'extracteur 4, qui est chargée en praséodyme et néodyme, est dirigée vers l'extracteur 5 dévolu au « Lavage éléments indésirables » tandis que la phase aqueuse sortant de l'extracteur 4 (dénommé « raffinat » sur la figure 2) est dirigée vers une unité de traitement des effluents aqueux du procédé.

Le « Lavage éléments indésirables » est réalisé dans l'extracteur 5 en mettant la phase organique entrant dans cet extracteur plusieurs fois en contact, à contre-courant, avec la phase aqueuse A4 qui comprend de l'acide nitrique à une concentration qui est au plus égale à la concentration en acide nitrique de la phase aqueuse issue de l'« Extraction Dy » mais qui est, de préférence, inférieure à cette concentration, chaque mise en contact étant suivie d'une séparation des phases aqueuse et organique. Typiquement, la concentration en acide nitrique de la phase aqueuse A4 va de 0,2 mol/L à 4 mol/L selon la concentration en acide nitrique de la phase aqueuse issue de l'« Extraction Dy » et est, de préférence, égale à 1 mol/L.

La phase organique sortant de l'extracteur 5 est dirigée vers l'extracteur 6 dévolu à la « Désextraction Pr+Nd » tandis que la phase aqueuse sortant de l'extracteur 5 est renvoyée vers l'extracteur 4 où elle rejoint la phase aqueuse issue de l'« Extraction Dy » et s'ajoute à elle.

La « Co-désextraction Pr+Nd » est réalisée dans l'extracteur 6, à température ambiante ou à chaud (45°-50°C), en mettant la phase organique entrant dans cet extracteur plusieurs fois en contact, à contre-courant, avec la phase aqueuse A5 qui comprend de l'acide nitrique comme acide et dont la concentration en acide nitrique est au plus égale à 0,001 mol/L, typiquement comprise entre 0,0001 mol/L et 0,001 mol/L et est, de préférence, égale à 0,001 mol/L, chaque mise en contact étant suivie d'une séparation des phases aqueuse et organique.

Pour favoriser la désextraction du praséodyme et du néodyme, la phase aqueuse A5 peut comprendre, outre de l'acide nitrique, un ou plusieurs agents complexant les terres rares du même type que ceux susceptibles d'être utilisés pour la « Désextraction Dy ».

À l'issue de la « Désextraction Pr+Nd », on obtient une phase aqueuse qui ne contient plus que du praséodyme et du néodyme comme éléments métalliques, et une phase organique qui rejoint la phase organique issue de la « Désextraction Dy » et est dirigée, conjointement avec cette dernière, vers l'extracteur 7 dévolu à la « Purification phase organique ».

**EXEMPLE** 3 : **Schéma de principe d'un deuxième mode de mise en oeuvre préféré du deuxième procédé de l'invention**

On se réfère à présent à la figure 3 qui illustre le principe d'un deuxième mode de mise en oeuvre préféré du deuxième procédé de l'invention, dans lequel ce procédé est également conçu pour récupérer sélectivement et à une échelle industrielle le dysprosium, le praséodyme et le néodyme à partir d'une phase aqueuse acide A1 similaire à celle traitée dans l'exemple 1 ci-avant mais en un seul cycle.

Ce cycle comprend :

- une première étape, dénommée « Co-extraction Dy+Pr+Nd » sur la figure 3, qui vise à co-extraire le dysprosium, le praséodyme et le néodyme de la phase aqueuse A1 au moyen d'une première phase organique, non miscible à l'eau ;
- une deuxième étape, dénommée « Lavage éléments indésirables » sur la figure 3, qui vise à laver la phase organique issue de la « Co-extraction Dy+Pr+Nd » au moyen d'une phase aqueuse acide A2 pour retirer de cette phase organique les éléments métalliques autres que le dysprosium, le praséodyme et le néodyme qui sont susceptibles d'avoir été partiellement extraits lors de la « Co-extraction Dy+Pr+Nd » ;
- une troisième étape, dénommée « Co-désextraction Pr+Nd » sur la figure 3, qui vise à désextraire sélectivement le praséodyme et le néodyme de la phase organique issue du « Lavage éléments indésirables » au moyen d'une phase aqueuse acide A5 ;
- une quatrième étape, dénommée « Lavage Dy » sur la figure 3, qui vise à retirer de la phase aqueuse issue de la « Co-désextraction Pr+Nd » la fraction de dysprosium ayant été désextraite lors de cette co-désextraction, au moyen d'une deuxième phase organique présentant la même composition, à la fois qualitative et quantitative, que la première phase organique ;
- une cinquième étape, dénommée « Désextraction Dy » sur la figure 3, qui vise à désextraire sélectivement le dysprosium de la phase organique issue de la « Co-désextraction Pr+Nd » au moyen d'une phase aqueuse acide A3 ; et
- une sixième étape, dénommée « Purification phase organique » sur la figure 3, qui vise à soumettre la phase organique issue de la « Désextraction Dy » à une série de traitements permettant de purifier cette phase pour sa réutilisation, après division en deux, dans un cycle ultérieur.

La « Co-extraction Dy+Pr+Nd » est réalisée dans l'extracteur 1 de la même façon que l'« Extraction Dy » des exemples 1 et 2.

La phase organique sortant de l'extracteur 1, qui est chargée en dysprosium, praséodyme et néodyme, est dirigée vers l'extracteur 2 dévolu au « Lavage éléments indésirables » tandis que la phase aqueuse sortant de l'extracteur 1 (dénommée « Raffinat » sur la figure 3) est dirigée vers une unité de traitement des effluents aqueux du procédé.

Le « Lavage éléments indésirables » est réalisé dans l'extracteur 2 en mettant la phase organique entrant dans cet extracteur plusieurs fois en contact, à contre-courant, avec la phase aqueuse A2 qui, dans ce cas, comprend typiquement une concentration en acide nitrique qui est comprise entre 0,2 mol/L et 4 mol/L selon la concentration en acide nitrique de la phase aqueuse A1 et est, de préférence, égale à 1 mol/L, chaque mise en contact étant suivie d'une séparation des phases aqueuse et organique.

La phase organique sortant de l'extracteur 2 est dirigée vers l'extracteur 4 dévolu à la « Co-désextraction Pr+Nd » tandis que la phase aqueuse sortant de l'extracteur 2 est renvoyée vers l'extracteur 1 où elle rejoint la phase aqueuse A1 et s'ajoute à elle.

La « Co-désextraction Pr+Nd » est réalisée dans l'extracteur 4 de la même façon que la « Co-désextraction Pr+Nd » de l'exemple 2, à ceci près que, d'une part, la phase aqueuse A5 présente une concentration en acide nitrique allant de 0,005 mol/L à 0,1 mol/L, par exemple de 0,01 mol/L, et, d'autre part, elle est réalisée à température ambiante, et ce, de sorte à limiter la quantité de dysprosium susceptible d'être désextraite conjointement avec le praséodyme et le néodyme.

La phase aqueuse sortant de l'extracteur 4 est envoyée vers l'extracteur 3 dévolu au « Lavage Dy » tandis que la phase organique sortant de l'extracteur 4 est dirigée vers l'extracteur 5 dévolu à la « Désextraction Dy ».

Le « Lavage Dy » est réalisé dans l'extracteur 3 en mettant la phase aqueuse issue de l'extracteur 4 plusieurs fois en contact, à contre-courant, avec la deuxième phase organique, chaque mise en contact étant suivie d'une séparation des phases aqueuse et organique. À l'issue de ce lavage, on obtient une phase aqueuse qui ne contient plus que du praséodyme et du néodyme comme éléments métalliques, et une phase organique qui est dirigée vers l'extracteur 4 où elle rejoint la phase organique issue de l'extracteur 2 et s'ajoute à elle.

La « Désextraction Dy » est réalisée dans l'extracteur 5 de la même manière que dans les exemples 1 et 2.

À l'issue de la « Désextraction Dy », on obtient une phase aqueuse qui ne contient plus que du dysprosium comme élément métallique, et une phase organique qui est dirigée vers l'extracteur 6 dévolu à la « Purification phase organique ».

**EXEMPLE 4 : Validation expérimentale de l'invention**

**4.1 - <u>Essais en tubes</u>** :

Dans les essais qui suivent, les concentrations des différents éléments métalliques dans les solutions ou phases aqueuses ont toutes été mesurées par spectrométrie d'émission atomique par torche à plasma, encore connue sous le sigle ICP-AES.

Les concentrations des éléments métalliques dans les phases organiques ont été estimées après avoir désextrait ces éléments dans une phase aqueuse fortement complexante (acide oxalique = 0,5 mol/L; TEDGA = 0,2 mol/L; $HNO_3$ = 1 mol/L; rapport volumique O/A = 1/5; durée de l'agitation = 10 minutes; température = 25°C) et après avoir mesuré les concentrations desdits éléments dans la phase aqueuse obtenue à l'issue de cette désextraction.

Par ailleurs, les coefficients de distribution et les facteurs de séparation ont été déterminés conformément aux conventions du domaine des extractions liquide-liquide, à savoir que :

- le coefficient de distribution d'un élément métallique M, noté $D_M$, entre deux phases, respectivement organique et aqueuse, est égal à :

$$D_M = \frac{[M]_{org.}}{[M]_{aq.}}$$

avec :

$[M]_{org.}$ = concentration de l'élément métallique dans la phase organique à l'équilibre d'extraction (en g/L) ; et
$[M]_{aq.}$ = concentration de l'élément métallique dans la phase aqueuse à l'équilibre d'extraction (en g/L) ;

- le facteur de séparation entre deux éléments métalliques M1 et M2, noté $FS_{M1/M2}$, est égal à :

$$FS_{M1/M2} = \frac{D_{M1}}{D_{M2}}$$

avec :

$D_{M1}$ = coefficient de distribution de l'élément métallique M1; et
$D_{M2}$ = coefficient de distribution de l'élément métallique M2.

4.1.1-Tests d'extraction réalisés sur des phases aqueuses nitriques synthétiques comprenant du bore, du fer, du praséodyme, du néodyme et du dysprosium :

On réalise des tests d'extraction en tubes, en utilisant :
- comme phases organiques : des phases comprenant soit 0,2 mol/L de TODGA dans du *n*-dodécane soit 0,2 mol/L de TODGA et 5% (v/v) de *n*-octanol (en tant que modificateur de phase) dans du n-dodécane ; et
- comme phases aqueuses : des phases obtenues par dissolution d'acide borique et de nitrates hydratés de fer, de praséodyme, de néodyme et de dysprosium dans une solution aqueuse d'acide nitrique ; toutes ces phases présentent les concentrations en bore, fer, praséodyme, néodyme et dysprosium qui sont indiquées dans le tableau I ci-après mais leur concentration en acide nitrique varie de 0,1 mol/L à 2,6 mol/L.

Tableau I

| Éléments | Concentrations (g/L) |
|----------|---------------------|
| B | 1,3 |
| Fe | 43,7 |
| Pr | 1,1 |
| Nd | 10,3 |
| Dy | 1,0 |

Chaque phase organique est mise en contact, sous agitation, avec l'une des phases aqueuses, volume à volume, pendant 30 minutes à 25°C, puis ces phases sont séparées l'une de l'autre après centrifugation.

Les résultats de ces tests montrent qu'il n'y a pas de formation d'une troisième phase lorsque la phase organique utilisée pour l'extraction comprend du n-octanol et ce, quelle que soit l'acidité de la phase aqueuse testée. Par contre, une troisième phase se forme en l'absence de *n*-octanol dans la phase organique.

Comme visible sur la figure 4A, qui illustre les coefficients de distribution des différents éléments métalliques en fonction de la concentration en acide nitrique des phases aqueuses testées, une extraction quantitative du dysprosium ($D_{Dy} > 100$) est obtenue pour l'ensemble de ces phases.

Le fer, qui est l'élément le plus abondant dans les phases aqueuses, est, lui, très peu extrait ($D_{Fe} < 0,01$).

Par ailleurs, comme le montre la figure 4B, qui illustre les facteurs de séparation entre le dysprosium et les autres éléments métalliques en fonction de la concentration en acide nitrique des phases aqueuses testées, la séparation du dysprosium vis-à-vis du fer et du bore est excellente puisque les facteurs de séparation $FS_{Dy/Fe}$ et $FS_{Dy/B}$ sont respectivement supérieurs à 10 000 et à 750. De plus, des facteurs de séparation $FS_{Dy/Nd}$ et $FS_{Dy/Pr}$ supérieurs à 10 sont obtenus quelle que soit l'acidité des phases aqueuses testées.

Ces résultats montrent qu'il est donc possible de récupérer aisément le dysprosium à partir d'une phase aqueuse acide comprenant de fortes concentrations en fer, bore, néodyme et praséodyme en utilisant un diglycolamide comme extractant.

4.1.2 - Récupération du dysprosium, du néodyme et du praséodyme à partir d'une phase aqueuse issue de la dissolution d'une poudre d'aimants permanents NdFeB en milieu nitrique 5,15 M :

On prépare une phase aqueuse par dissolution d'une poudre d'aimants permanents NdFeB rebutés en milieu nitrique 5,15 M supplémenté en $H_2O_2$ (1% volumique) comme décrit dans la référence **[2]** précitée, la poudre d'aimants permanents ayant été, elle-même, obtenue par démagnétisation de ces aimants au moyen d'un traitement thermique en étuve (200°C - 5 heures), broyage puis traitement d'hydruration-déshydruration.

Les concentrations en éléments métalliques de la phase aqueuse ainsi obtenue sont indiquées dans le tableau II ci-après.

Tableau II

| Éléments | Concentrations (g/L) |
|----------|---------------------|
| B | 0,4 |
| Fe | 36 |
| Co | 0,2 |

(suite)

| Éléments | Concentrations (g/L) |
|---|---|
| Ni | 0,8 |
| Cu | 0,5 |
| Pr | 2,9 |
| Nd | 11 |
| Dy | 0,2 |

* Test d'extraction :

La phase aqueuse précédemment obtenue est soumise à un test d'extraction que l'on réalise en utilisant comme phase organique, une phase comprenant 0,2 mol/L de TODGA et 5% (v/v) de *n*-octanol dans du *n*-dodécane. Pour ce faire, la phase aqueuse est mise en contact, sous agitation, avec cette phase organique dans un rapport volumique O/A de 1, pendant 30 minutes à 25°C, puis ces phases sont séparées l'une de l'autre par décantation.

Le tableau III ci-après présente les coefficients de distribution des différents éléments métalliques, les facteurs de séparation $FS_{Dy/M}$ et $FS_{Pr/M}$ ainsi que la concentration de la phase aqueuse en acide nitrique à l'équilibre obtenus pour ce test d'extraction.

Tableau III

| Éléments | $D_M$ | $FS_{Dy/M}$ | $FS_{Pr/M}$ | $[HNO_3]_{éq.}$ |
|---|---|---|---|---|
| B | 0,06 | 383 | 8,3 | |
| Fe | < 0,004 | > 5 750 | > 125 | |
| Co | < 0,02 | > 1150 | > 25 | |
| Ni | < 0,005 | > 4 600 | > 100 | 4,76 M |
| Cu | < 0,04 | > 575 | > 12,5 | |
| Pr | 0,5 | 46 | 1,0 | |
| Nd | 1,3 | 18 | 0,4 | |
| Dy | 23 | 1,0 | 0,02 | |

Ce tableau confirme l'extraction quantitative du dysprosium ($D_{Dy}$ = 23) précédemment obtenue lors des tests d'extraction réalisés au point 4.1.1 ci-avant sur des phases aqueuses nitriques synthétiques.

Il confirme également la forte sélectivité que présente le TODGA pour le dysprosium par rapport aux autres éléments métalliques, y compris les terres rares légères, puisque les facteurs de séparation $FS_{Dy/Pr}$ et $FS_{Dy/Nd}$ sont respectivement de 46 et 18.

Enfin, il montre qu'il est possible de séparer efficacement, après avoir extrait le dysprosium de la phase aqueuse, le didyme Pr+Nd des autres éléments métalliques encore présents dans cette phase aqueuse en utilisant la même phase organique que celle utilisée pour extraire le dysprosium.

* Tests de désextraction :

La phase organique obtenue à l'issue du test d'extraction ci-avant est soumise à une série de tests de désextraction que l'on réalise en utilisant comme phase aqueuse, une solution aqueuse d'acide nitrique à 0,001 mol/L (pH 3).

Pour ce faire, des aliquotes de la phase aqueuse sont mises en contact une première fois (ci-après « contact 1 »), sous agitation, avec des aliquotes de la phase organique dans un rapport volumique O/A de 1/5, pendant 30 minutes à 25°C, 40°C ou 55°C, puis ces aliquotes sont séparées les unes des autres par décantation.

Les concentrations en éléments métalliques ainsi que le pH des aliquotes de phase aqueuse ainsi séparées sont mesurés, après quoi ces aliquotes sont de nouveau mises en contact (ci-après « contact 2 ») avec des aliquotes de la phase organique dans les mêmes conditions que précédemment.

Le tableau IV ci-après présente les coefficients de distribution du dysprosium, du néodyme et du praséodyme obtenus pour ces tests de désextraction. Sont également indiqués dans ce tableau les pH présentés par les aliquotes de phase aqueuse après chacun des contacts 1 et 2.

Tableau IV

| | | $D_M$ | | | | | |
|---|---|---|---|---|---|---|---|
| | | **Désextraction à 25°C** | | **Désextraction à 40°C** | | **Désextraction à 55°C** | |
| | | Contact 1 | Contact 2 | Contact 1 | Contact 2 | Contact 1 | Contact 2 |
| Éléments | **Dy** | 20,2 | 0,9 | 3,8 | 0,65 | 0,73 | 0,86 |
| | **Nd** | 0,60 | 0,15 | 0,13 | < 0,1 | 0,05 | < 0,05 |
| | **Pr** | 0,36 | < 0,3 | 0,10 | < 0,1 | 0,05 | < 0,05 |
| $pH_{après}$ contact | | 1,2 | 3,0 | 1,2 | 3,0 | 1,2 | 3,0 |

Ce tableau montre qu'à 25°C, la désextraction du dysprosium n'est efficace qu'au deuxième contact ($D_{Dy} < 1$) lorsque le pH est supérieur à 1 (pH 3). Il montre également qu'il est possible d'améliorer la désextraction du dysprosium au premier contact en réalisant cette désextraction à une température plus élevée. Ainsi, à 55°C, un coefficient de distribution inférieur à 1 ($D_{Dy} = 0,7$) est obtenu pour le dysprosium dès le premier contact à un pH de 1,16 à l'équilibre.

Par contre, une bonne désextraction du didyme Pr+Nd est observée dès le premier contact et ce, quelle que soit la température, cette désextraction étant toutefois améliorée par une augmentation de la température.

4.1.3 - Récupération du dysprosium à partir d'une phase aqueuse issue de la dissolution d'une poudre d'aimants permanents NdFeB en milieu nitrique 0,4 M :

On prépare une phase aqueuse par dissolution d'une poudre d'aimants permanents NdFeB rebutés en milieu nitrique 0,4 M de la même manière qu'au point 4.1.2 ci-avant, à ceci près que la solution aqueuse utilisée pour dissoudre la poudre résultant du traitement d'hydruration-déshydruration est une solution aqueuse d'acide nitrique 0,4M.

Les concentrations en éléments métalliques de la phase aqueuse ainsi obtenue sont indiquées dans le tableau V ci-après.

Tableau V

| Éléments | Concentrations (g/L) |
|---|---|
| B | 0,4 |
| Fe | 32 |
| Co | 0,2 |
| Ni | 0,08 |
| Cu | 0,1 |
| Pr | 2,7 |
| Nd | 11 |
| Dy | 0,2 |

Puis on réalise, à partir de cette phase aqueuse, un test d'extraction suivi d'une série de tests de désextraction dans les mêmes conditions que celles décrites au point 4.1.2 ci-avant.

Le tableau VI ci-après présente les coefficients de distribution des différents éléments métalliques, les facteurs de séparation $FS_{Dy/M}$ et $FS_{Pr/M}$ ainsi que la concentration de la phase aqueuse en acide nitrique à l'équilibre obtenus pour le test d'extraction tandis que le tableau VII ci-après présente les coefficients de distribution du dysprosium, du néodyme et du praséodyme obtenus pour les tests de désextraction. Sont également indiqués dans ce tableau les pH présentés par les aliquotes de solution aqueuse après le contact 1.

Tableau VI

| Eléments | $D_M$ | $FS_{Dy/M}$ | $FS_{Pr/M}$ | $[HNO_3]_{éq.}$ |
|---|---|---|---|---|
| B | 0,12 | 225 | 14 | |
| Fe | < 0,002 | > 3 500 | > 857 | |
| Co | < 0,02 | > 1 350 | > 85 | |
| Ni | < 0,05 | > 540 | > 34 | 0,34 M |
| Cu | < 0,17 | 158 | 10 | |
| Pr | 1,7 | 15,9 | 1,0 | |
| Nd | 2,1 | 12,8 | 0,8 | |
| Dy | 27 | 1,0 | 0,06 | |

Tableau VII

| | | $D_M$ | | |
|---|---|---|---|---|
| | | Désextraction à 25°C | Désextraction à 40°C | Désextraction à 55°C |
| | | Contact 1 | Contact 1 | Contact 1 |
| Éléments | Dy | 5,4 | 0,76 | 0,23 |
| | Nd | 0,17 | 0,05 | 0,02 |
| | Pr | 0,11 | 0,04 | 0,02 |
| $pH_{après\ contact}$ | | 2,0 | 2,0 | 2,0 |

Le tableau VI montre qu'il est également possible d'extraire et de séparer efficacement le dysprosium d'une part, puis le didyme Pr+Nd d'autre part, des autres éléments métalliques (en considérant les facteurs de séparation $FS_{Pr/élément}$ comme dimensionnants pour la séparation) à partir d'une phase aqueuse de concentration bien inférieure à celle de la phase aqueuse utilisée au point 4.1.2 ci-avant (0,4 M *versus* 5,15 M). Toutefois, la sélectivité du TODGA pour le dysprosium par rapport au praséodyme et au néodyme apparaît être plus faible que celle observée pour la phase aqueuse utilisée au point 4.1.2 ci-avant, en sorte qu'il semble préférable que la solution issue de la dissolution d'une poudre d'aimants permanents NdFeB à partir de laquelle est extrait le dysprosium ait une concentration en acide nitrique significativement supérieure à 0,4 M.

Le tableau VII confirme, lui, qu'il est possible de désextraire les terres rares comprenant du TODGA comme extractant au moyen d'une phase aqueuse nitrique très diluée (pH 3) et que cette désextraction est améliorée par une augmentation de la température.

4.1.4- Influence de la nature des chaînes alkyles du diglycolamide :

On réalise des tests d'extraction en tubes, en utilisant :

- comme phases organiques : des phases comprenant 0,2 mol/L de l'un des diglycolamides suivants : TODGA, TEHDGA ou TdDDGA, avec ou sans 5% (v/v) de n-octanol (en tant que modificateur de phase), dans du n-dodécane ; et
- comme phases aqueuses : les phases aqueuses issues de la dissolution d'une poudre d'aimants permanents NdFeB en milieu nitrique 5,15 M et 0,4 M, respectivement préparées aux points 4.1.2 et 4.1.3 ci-avant.

Ces tests d'extraction sont réalisés dans les mêmes conditions que celles décrites au point 4.1.2 ci-avant.

Le tableau VIII ci-après présente les coefficients de distribution du dysprosium, du néodyme, du praséodyme, du fer et du bore ainsi que les pH présentés par les phases aqueuses à l'équilibre.

Tableau VIII

| | | Phases organiques | | | | | |
|---|---|---|---|---|---|---|---|
| | | TODGA | | TEHDGA | | TdDDGA | |
| | | 5% octanol | 0% octanol | 5% octanol | 0% octanol | 5% octanol | 0% octanol |
| **Phase aqueuse 5,15 M** | $D_{Dy}$ | 23 | 3ème phase | 3ème phase | 3ème phase | 24,9 | 25,3 |
| | $D_{Nd}$ | 1,4 | 3ème phase | 3ème phase | 3ème phase | 1,65 | 1,65 |
| | $D_{Pr}$ | 0,5 | 3ème phase | 3ème phase | 3ème phase | 1,61 | 1,62 |
| | $D_{Fe}$ | < 0,004 | 3ème phase | 3ème phase | 3ème phase | 0,002 | 0,002 |
| | $D_B$ | 0,06 | 3ème phase | 3ème phase | 3ème phase | 0,09 | 0,03 |
| | $[HNO_3]_{éq}$ (M) | 4,76 | 3ème phase | 3ème phase | 3ème phase | 4,71 | 4,88 |
| **Phase aqueuse 0,4 M** | $D_{Dy}$ | 27 | 3ème phase | 3,08 | 3ème phase | 29,8 | 30,1 |
| | $D_{Nd}$ | 2,4 | 3ème phase | 3,90 | 3ème phase | 2,42 | 2,55 |
| | $D_{Pr}$ | 1,7 | 3ème phase | 3,54 | 3ème phase | 1,67 | 2,02 |
| | $D_{Fe}$ | < 0,002 | 3ème phase | 0,001 | 3ème phase | 0,001 | < 0,001 |
| | $D_B$ | 0,08 | 3ème phase | 0,13 | 3ème phase | 0,17 | 0,04 |
| | $[HNO_3]_{éq}$ (M) | 0,34 | 3ème phase | 0,33 | 3ème phase | 0,31 | 0,33 |

Ce tableau montre tout d'abord qu'une troisième phase ne se forme pas lorsqu'on utilise du TdDDGA comme extractant, même en l'absence de modificateur de phase dans la phase organique. Par contre, l'utilisation du TODGA et du TEHDGA conduit, en l'absence de modificateur de phase, à la formation d'une troisième phase. Une 3ème phase est également observée avec le TEHDGA avec 5% de n-octanol dans le cas de la phase aqueuse à plus forte acidité ($HNO_3$ 5,15 M).

Comme déjà illustré dans la littérature, la capacité de charge du TdDDGA est supérieure à celles des extractants TODGA et TEHDGA. L'utilisation du TdDDGA aurait donc l'avantage d'éviter l'usage d'un modificateur de phase dans la mise en oeuvre du procédé de l'invention.

Ce tableau montre également que, dans le cas du TdDDGA, les coefficients de distribution du dysprosium, du néodyme, du praséodyme, du fer et du bore sont comparables entre les tests réalisés avec et sans n-octanol dans les phases organiques, ce qui met en évidence l'absence d'impact de ce modificateur de phase sur les coefficients de distribution des éléments métalliques.

Les coefficients de distribution obtenus, pour un même élément métallique, avec le TODGA et le TdDDGA sont très proches et ce, quelle que soit l'acidité de la phase aqueuse. Les terres rares sont quantitativement extraites avec le TdDDGA avec une excellente sélectivité vis-à-vis des autres éléments métalliques. Le TdDDGA a un pouvoir extractant légèrement supérieur au TODGA (notamment dans le cas du praséodyme) alors que, dans le cas de la phase aqueuse à plus faible acidité ($HNO_3$ 0,4 M), le TEHDGA fait preuve d'un pouvoir extractant beaucoup plus faible que les deux autres diglycolamides et conduit à de plus faibles sélectivités intra-terres rares (Dy/Nd notamment).

Ces résultats confirment l'excellente aptitude que présentent le TODGA, TEHDGA et TdDDGA à séparer les terres rares des autres éléments métalliques et, notamment, du fer. Le TdDDGA apparaît être particulièrement bien indiqué pour récupérer le dysprosium, puis le praséodyme et le néodyme, à partir d'une solution aqueuse acide de dissolution d'une poudre d'aimants permanents en raison de son fort pouvoir extractant mais aussi du fait qu'il offre la possibilité de s'affranchir de l'utilisation d'un modificateur de phase.

**4.2** - **Essais en mélangeurs-décanteurs** :

4.2.1 - Récupération du dysprosium à partir d'une phase aqueuse issue de la dissolution d'une poudre d'aimants permanents NdFeB en milieu nitrique 1 M :

Un essai est réalisé en mélangeurs-décanteurs pour vérifier la possibilité de récupérer quantitativement le dysprosium, et ce sélectivement vis-à-vis des autres éléments métalliques, à partir d'une phase aqueuse A1, issue de la dissolution d'une poudre d'aimants permanents NdFeB en milieu nitrique 1 M, en appliquant le mode de mise en oeuvre préféré du premier procédé de l'invention qui est illustré sur la figure 1.

L'installation utilisée pour la réalisation de cet essai est représentée sur la figure 5.

Comme le montre cette figure, l'installation comprend trois batteries de mélangeurs-décanteurs :

- une première batterie à 3 étages de mélangeurs-décanteurs dévolue à l'« Extraction Dy » ;
- une deuxième batterie à 5 étages de mélangeurs-décanteurs dévolue au « Lavage Pr+Nd+éléments indésirables » ; et
- une troisième batterie à 8 étages de mélangeurs-décanteurs dévolue à la « Désextraction Dy ».

La phase aqueuse A1, qui a été préparée comme décrit aux points 4.1.2 et 4.1.3 ci-avant, comprend 0,69 g/L de dysprosium, 0,020 g/L de praséodyme, 6,62 g/L de néodyme, 1,9 g/L de fer et 1 mol/L d'acide nitrique, tandis que la phase organique utilisée pour l'« Extraction Dy » comprend 0,2 mol/L de TODGA et 5% (v/v) de n-octanol dans du TPH.

Les étapes « Extraction Dy » et « Lavage Pr+Nd+éléments indésirables » sont réalisées à température ambiante alors que la « Désextraction Dy » est réalisée à une température de 45°C à 50°C.

Après la « Désextraction Dy », la phase organique est recyclée en tête du procédé après un contrôle de sa concentration en TODGA et un éventuel ajustement de cette concentration.

L'essai est effectué en continu pendant 20 heures.

Son bon fonctionnement est suivi par analyse de prélèvements réguliers en divers points de l'installation.

À la fin de l'essai, les différentes phases aqueuses et organiques sont collectées et analysées dans le but d'évaluer les performances du procédé.

Les résultats de ces analyses sont reportés sur la figure 5. Ils montrent que, dans les conditions de l'essai, le dysprosium est récupéré quantitativement (à environ 99,7%) avec un excellent degré de pureté (> 99,99%) vis-à-vis des autres éléments métalliques présents dans les aimants (Nd, Pr, Fe, Co, B, Ni, Al, etc). Le dysprosium est de plus concentré d'un facteur 6 par le procédé puisque sa concentration, initialement de 0,69 g/L dans la phase aqueuse A1, est de 4,05 g/L dans la phase aqueuse issue de la « Désextraction Dy ».

Il est, en outre, à noter que tous les éléments métalliques ont une concentration inférieure à 0,001 g/L dans la phase organique recyclée.

4.2.2 - Récupération du dysprosium, du néodyme et du praséodyme à partir d'une phase aqueuse issue de la dissolution d'une poudre d'aimants permanents NdFeB en milieu nitrique 1 M :

Un essai est également réalisé en mélangeurs-décanteurs pour vérifier la possibilité de récupérer quantitativement le dysprosium, le praséodyme et le néodyme, et ce sélectivement vis-à-vis des autres éléments métalliques, à partir d'une phase aqueuse A1, issue de la dissolution d'une poudre d'aimants permanents NdFeB en milieu nitrique 1 M, en appliquant le deuxième mode de mise en oeuvre préféré du deuxième procédé de l'invention qui est illustré sur la figure 3.

L'installation utilisée pour la réalisation de cet essai est représentée sur la figure 6.

Comme le montre cette figure, l'installation comprend cinq batteries de mélangeurs-décanteurs :

- une première batterie à 4 étages de mélangeurs-décanteurs dévolue à la « Co-extraction Dy+Pr+Nd » ;
- une deuxième batterie à 4 étages de mélangeurs-décanteurs dévolue au « Lavage éléments indésirables » ;
- une troisième batterie à 5 étages de mélangeurs-décanteurs dévolue à la « Co-désextraction Pr+Nd » ;
- une quatrième batterie à 3 étages de mélangeurs-décanteurs dévolue au « Lavage Dy » ; et
- une cinquième batterie à 8 étages dévolue à la « Désextraction Dy ».

La phase aqueuse A1, qui a été préparée comme décrit aux points 4.1.2 et 4.1.3 ci-avant, comprend 1,06 g/L de dysprosium, 6,7 g/L de praséodyme, 20,74 g/L de néodyme, 60,25 g/L de fer et 1 mol/L d'acide nitrique, tandis que la phase organique utilisée pour la « Co-extraction Dy+Pr+Nd » comprend 0,2 mol/L de TODGA et 5% (v/v) de n-octanol dans du TPH.

Toutes les étapes sont réalisées à température ambiante sauf la « Désextraction Dy » qui est réalisée à une température de 45°C à 50°C.

Après la « Désextraction Dy », la phase organique est recyclée en tête du procédé après un contrôle de sa concentration en TODGA et un éventuel ajustement de cette concentration.

L'essai est effectué en continu pendant 20 heures.

Son bon fonctionnement est suivi par analyse de prélèvements réguliers en divers points de l'installation.

À la fin de l'essai, les différentes phases aqueuses et organiques sont collectées et analysées dans le but d'évaluer les performances du procédé.

Les résultats de ces analyses sont reportés sur la figure 6. Ils montrent que, dans les conditions de l'essai, le praséodyme et le néodyme sont récupérés à plus de 99,9% avec un excellent degré de pureté (> 99,9%) vis-à-vis des autres éléments métalliques présents dans les aimants (Fe, Co, B, etc). Le dysprosium est ensuite récupéré à environ 99,5% avec également un excellent degré de pureté (> 99,9%) vis-à-vis desdits autres éléments métalliques.

**EXEMPLE 5 : Schéma détaillé d'un exemple du premier mode de mise en oeuvre préféré du deuxième procédé de l'invention**

Un modèle mathématique d'extraction des terres rares et du fer d'une solution aqueuse issue de la dissolution d'une poudre d'aimants permanents NdFeB en milieu nitrique par le premier mode de mise en oeuvre préféré du deuxième procédé de l'invention illustré sur la figure 2, en utilisant une phase organique comprenant du TODGA en tant qu'extractant, et du n-octanol en tant que modificateur de phase, a été développé.

Le modèle rend compte de la distribution des espèces d'intérêt, ici les terres rares, entre phase aqueuse et phase organique. Pour optimiser la fiabilité du modèle, celui-ci est basé sur une description chimique des phénomènes. D'une part, les coefficients d'activité en phase aqueuse sont pris en compte pour que la gamme de validité du modèle soit la plus large possible en termes de concentration en acide nitrique en particulier, et, d'autre part, les constantes du modèle sont déterminées par optimisation numérique des données expérimentales.

Dans le cas présent, le modèle a été développé à partir des données expérimentales obtenues aux points 4.1.1, 4.1.2 et 4.1.3 de l'exemple 4 ci-avant avec une phase organique comprenant 0,2 mol/L de TODGA et 5% (v/v) de *n*-octanol dans du *n*-dodécane.

Il a été nécessaire de modéliser le comportement de l'acide nitrique car l'extraction de cet acide entre en compétition avec celle des terres rares, puis de proposer, à partir de l'optimisation des données expérimentales, des complexes de terres rares. Ont été retenus les complexes de type $\overline{\{TR(NO_3)_3, TODGA_n\}}$ où TR désigne Dy, Pr ou Nd et n varie de 1 à 3.

À chaque espèce transférée entre une phase aqueuse et une phase organique, une équation mathématique classique en chimie a été associée.

Pour l'acide nitrique et les terres rares (TR), les équations mathématiques sont les suivantes :

$$K_n = \frac{\overline{[\{HNO_3, TODGA_n\}]}}{\left(\gamma_{HNO_3}\cdot[HNO_3]\right)^m\cdot\overline{[TODGA]}} \quad \text{où } n \text{ variede1 à 3 ;}$$

$$K'_n = \frac{\overline{[\{TR(NO_3)_3, TODGA_n\}]}}{\gamma_{TR(NO_3)_3}\cdot[TR(NO_3)_3]\cdot\overline{[TODGA]}^n} \quad \text{où } TR = \text{Dy, Pr ou Nd et } m \text{ varie de 1 à 3.}$$

Dans ces équations, $\gamma_{TR(NO3)3}$ et $\gamma_{HNO_3}$ désignent les coefficients d'activité de la terre rare TR et de l'acide nitrique respectivement et les paramètres $K_n$ et $K'_n$ sont des constantes.

Ces constantes ont été optimisées afin de reproduire au mieux les coefficients de distribution expérimentaux. La comparaison des données expérimentales et des données calculées par le modèle est présentée dans le tableau IX ci-après.

Tableau IX

| | $[H^+]_{éq.}$ (M) | $D_{Fe}$ (exp.) | $D_{Fe}$ (calc.) | $D_{Dy}$ (exp.) | $D_{Dy}$ (calc.) | $D_{Nd}$ (exp.) | $D_{Nd}$ (calc.) | $D_{Pr}$ (exp.) | $D_{Pr}$ (calc.) |
|---|---|---|---|---|---|---|---|---|---|
| | 0,109 | 0,0041 | 0,0038 | 119 | 104 | 7,6 | 4,5 | 3,4 | 4,1 |
| | 0,173 | 0,0032 | 0,0037 | 121 | 92 | 4,9 | 3,5 | 3,1 | 3,1 |
| Phases aqueuses nitriques synthétiques | 0,418 | 0,0033 | 0,0033 | 115 | 102 | 4,6 | 3,3 | 2,6 | 2,8 |
| | 0,761 | 0,0031 | 0,0030 | 114 | 116 | 4,1 | 3,2 | 2,1 | 2,5 |
| | 1,49 | 0,0024 | 0,0027 | 105 | 132 | 3,6 | 3,2 | 1,4 | 2,0 |
| | 2,23 | 0,0019 | 0,0029 | 104 | 108 | 3,4 | 3,3 | 1,2 | 1,7 |

(suite)

| | $[H^+]_{éq.}$ (M) | $D_{Fe}$ (exp.) | $D_{Fe}$ (calc.) | $D_{Dy}$ (exp.) | $D_{Dy}$ (calc.) | $D_{Nd}$ (exp.) | $D_{Nd}$ (calc.) | $D_{Pr}$ (exp.) | $D_{Pr}$ (calc.) |
|---|---|---|---|---|---|---|---|---|---|
| Phases aqueuses issues de la dissolution d'une poudre d'aimants en milieu nitrique | 0,34 | 0,0014 | 0,0014 | 37 | 43 | 2,3 | 1,8 | 1,9 | 1,6 |
| | 2,57 | 0,0018 | 0,0030 | 197 | 139 | 13,4 | 3,3 | 6,8 | 2,1 |
| | 4,76 | 0,0036 | 0,0037 | 34 | 32 | 1,5 | 1,2 | 0,6 | 0,5 |
| | 5,04 | 0,0037 | 0,0034 | 32 | 32 | 2,4 | 1,2 | 0,9 | 0,5 |

Le modèle mathématique ainsi développé a permis d'aboutir au schéma détaillé qui est illustré sur les figures 7A et 7B, dans lesquelles la figure 7A correspond au premier cycle dévolu à la récupération sélective du dysprosium tandis que la figure 7B correspond au deuxième cycle dévolu à la récupération sélective du praséodyme et du néodyme. Sur ces figures, n'est toutefois pas représentée l'étape commune aux deux cycles de purification de la phase organique.

Selon ce schéma, un extracteur à 7 étages serait nécessaire, dans le premier cycle, pour extraire plus de 99,99% du dysprosium de la phase aqueuse A1 (« Extraction Dy ») alors qu'un extracteur également à 7 étages permettrait de séparer le dysprosium des autres terres rares et des autres éléments métalliques (« Lavage Pr+Nd+ élément indésirables ») et d'atteindre une pureté du dysprosium de l'ordre de 99,99%. Un extracteur à 5 étages serait nécessaire pour désextraire quantitativement le dysprosium de la phase organique issue du « Lavage Pr+Nd+ éléments indésirables » (« Désextraction Dy ») mais, au vu des résultats présentés dans les tableaux IV et VII ci-avant, ce nombre d'étages pourrait être réduit si l'extracteur était chauffé à une température allant de 40 à 55°C.

Dans le second cycle, un extracteur à 7 étages serait nécessaire pour co-extraire plus de 99,99% du praséodyme et du néodyme présents dans la phase aqueuse issue de l'« Extraction Dy » (« Co-extraction Pr+Nd ») alors qu'un extracteur à 3 étages serait suffisant pour séparer le mélange Nd+Pr des autres éléments métalliques (« Lavage éléments indésirables ») et d'atteindre une pureté du didyme Pr+Nd supérieure à 99,99%. La désextraction du néodyme et du praséodyme de la phase organique s'étant révélée plus aisée que celle du dysprosium, un extracteur à 3 étages devrait être suffisant pour récupérer quantitativement le didyme Pr+Nd purifié en phase aqueuse (« Co-désextraction Pr+Nd »).

L'invention ne se limite pas aux modes de mise en oeuvre décrits dans les exemples ci-avant. En particulier, il est tout à fait possible d'adapter le schéma montré sur les figures 7A et 7B, qui a été défini pour traiter une phase aqueuse A1 comprenant 5 mol/L d'acide nitrique, au traitement de phases aqueuses comprenant un autre acide fort et/ou présentant une tout autre acidité et, notamment, une acidité beaucoup plus faible telle que, par exemple, de 0,4 mol/L d'acide nitrique.

## RÉFÉRENCES CITÉES

[1] H. Narita et M. Tanaka, Solvent Extraction Research and Development, Japan, 2013, 20, 115-121

[2] Demande internationale WO 2014/064597

## Revendications

1.   Procédé de récupération sélective d'au moins une terre rare TR1, de numéro atomique au moins égal à 62, à partir d'une phase aqueuse acide A1 issue du traitement d'aimants permanents usagés ou rebutés et comprenant une ou plusieurs terre(s) rare(s) TR1, des métaux de transition et une concentration en acide fort allant de 0,2 mol/L à 6 mol/L, lequel procédé comprend :

a) l'extraction de la (des) terre(s) rare(s) TR1 de la phase aqueuse A1, par mise en contact de la phase aqueuse A1 avec une phase organique non-miscible à l'eau, qui comprend un diglycolamide ayant un nombre total d'atomes de carbone au moins égal à 24 comme extractant, dans un diluant organique, puis séparation des phases aqueuse et organique ;

b) le lavage de la phase organique obtenue à l'issue de l'étape a), par mise en contact de la phase organique avec une phase aqueuse acide A2, qui comprend un acide fort identique à l'acide fort de la phase aqueuse A1, à une concentration au plus égale à la concentration en acide fort de la phase aqueuse A1, puis séparation des phases aqueuse et organique ; et

c) la désextraction de la (des) terre(s) rare(s) TR1 de la phase organique obtenue à l'issue de l'étape b), par mise en contact de la phase organique avec une phase aqueuse acide A3 qui présente un pH au moins égal à 3, puis séparation des phases aqueuse et organique.

2. Procédé selon la revendication 1, dans lequel :

la phase aqueuse A2 comprend de 0,01 mol/L à 0,5 mol/L d'acide fort, de préférence d'acide nitrique, et/ou la phase aqueuse A3 comprend de 0,0001 mol/L à 0,001 mol/L d'un acide fort, de préférence d'acide nitrique.

3. Procédé selon la revendication 1 ou la revendication 2, qui comprend un cycle, le cycle comprenant les étapes a), b), c) et une purification de la phase organique issue de l'étape c).

4. Procédé selon l'une quelconque des revendications 1 à 3, dans lequel la phase aqueuse A1 est issue du traitement d'aimants permanents Néodyme-Fer-Bore dans un acide fort et la terre rare TR1 est le dysprosium.

5. Procédé selon la revendication 1, dans laquelle la phase aqueuse acide A1 comprend de plus une ou plusieurs terre(s) rare(s) TR2, de numéro atomique au plus égal à 61, et le procédé comprend de plus la récupération sélective d'au moins une terre rare TR2, laquelle récupération comprend les étapes suivantes :

d) l'extraction de la (des) terre(s) rare(s) TR2 de la phase aqueuse obtenue à l'issue de l'étape a), par mise en contact de la phase aqueuse avec une deuxième phase organique, non miscible à l'eau, qui comprend le même extractant que la première phase organique, dans un diluant organique, puis séparation des phases aqueuse et organique ;
e) le lavage de la phase organique obtenue à l'issue de l'étape d), par mise en contact de la phase organique avec une phase aqueuse acide A4, qui comprend un acide fort identique à l'acide fort de la phase aqueuse A1, à une concentration au plus égale à la concentration en acide fort de la phase aqueuse issue de l'étape a), puis séparation des phases aqueuse et organique ; et
f) la désextraction de la (des) terre(s) rare(s) TR2 de la phase organique obtenue à l'issue de l'étape e), par mise en contact de la phase organique avec une phase aqueuse acide A5 qui présente un pH au moins égal à 3, puis séparation des phases aqueuse et organique.

6. Procédé selon la revendication 5, dans lequel :

la phase aqueuse A2 comprend de 0,01 à 0,5 mol/L d'acide fort, de préférence d'acide nitrique, et/ou la phase aqueuse A4 comprend de 0,2 mol/L à 4 mol/L d'acide fort, de préférence d'acide nitrique, et/ou chacune des phases aqueuses A3 et A5 comprend de 0,0001 mol/L à 0,001 mol/L d'un acide fort, de préférence d'acide nitrique.

7. Procédé selon la revendication 5 ou la revendication 6, qui comprend un premier et un deuxième cycle, le premier cycle comprenant les étapes a), b) et c), le deuxième cycle comprenant les étapes d), e) et f), les premier et deuxième cycles comprenant de plus une purification d'une phase organique formée par la réunion des phases organiques issues des étapes c) et f) et une division de la phase organique ainsi purifiée en les première et deuxième phases organiques.

8. Procédé selon l'une quelconque des revendications 5 à 7, dans lequel la phase aqueuse A1 est issue du traitement d'aimants permanents Néodyme-Fer-Bore dans un acide fort, la terre rare TR1 est le dysprosium et les terres rares TR2 sont le praséodyme et le néodyme.

9. Procédé de récupération sélective d'au moins une terre rare TR1, de numéro atomique au moins égal à 62, et d'au moins une terre rare TR2, de numéro atomique au plus égal à 61, à partir d'une phase aqueuse acide A1 issue du traitement d'aimants permanents usagés ou rebutés et comprenant une ou plusieurs terre(s) rare(s) TR1 et une ou plusieurs terre(s) rare(s) TR2, des métaux de transition et une concentration en acide fort allant de 0,2 mol/L à 6 mol/L, lequel procédé comprend :

a) l'extraction de la (des) terre(s) rare(s) TR1 et de la (des) terre(s) rare(s) TR2 de la phase aqueuse A1, par mise en contact de la phase aqueuse A1 avec une première phase organique non-miscible à l'eau, qui comprend un diglycolamide ayant un nombre total d'atomes de carbone au moins égal à 24 comme extractant, dans un diluant organique, puis séparation des phases aqueuse et organique ;
b) le lavage de la phase organique obtenue à l'issue de l'étape a), par mise en contact de la phase organique avec une phase aqueuse acide A2, qui comprend un acide fort identique à l'acide fort de la phase aqueuse A1, à une concentration au plus égale à la concentration en acide fort de la phase aqueuse A1, puis séparation des phases aqueuse et organique ;

b') la désextraction de la (des) terre(s) rare(s) TR2 de la phase organique obtenue à l'issue d'étape b), par mise en contact de la phase organique avec une phase aqueuse acide A5, qui présente un pH de 1 à 2,3, puis séparation des phases organique et aqueuse ;
b") le lavage de la phase aqueuse obtenue à l'issue de l'étape b'), par mise en contact de la phase aqueuse avec une deuxième phase organique, non miscible à l'eau, qui comprend le même extractant que la première phase organique, dans un diluant organique, puis séparation des phases aqueuse et organique ; et

c) la désextraction de la (des) terre(s) rares(s) TR1 de la phase organique obtenue à l'issue de l'étape b'), par mise en contact de la phase organique avec une phase aqueuse acide A3 qui présente un pH au moins égal à 3, puis séparation des phases aqueuse et organique.

10. Procédé selon la revendication 9, dans lequel :

la phase aqueuse A2 comprend de 0,2 mol/L à 4 mol/L d'acide fort, de préférence d'acide nitrique, et/ou
la phase aqueuse A5 comprend de 0,005 mol/L à 0,1 mol/L d'un acide fort, de préférence d'acide nitrique, et/ou
la phase aqueuse A3 comprend de 0,0001 mol/L à 0,001 mol/L d'un acide fort, de préférence d'acide nitrique.

11. Procédé selon la revendication 9 ou la revendication 10, qui comprend un cycle, le cycle comprenant les étapes a), b), b'), b"), c), une purification de la phase organique issue de l'étape c) et une division de la phase organique ainsi purifiée en les première et deuxième phases organiques.

12. Procédé selon l'une quelconque des revendications 9 à 11, dans lequel la phase aqueuse A1 est issue du traitement d'aimants permanents Néodyme-Fer-Bore dans un acide fort, la terre rare TR1 est le dysprosium et les terres rares TR2 sont le praséodyme et le néodyme.

13. Procédé selon l'une quelconque des revendications 1, 5 ou 9, dans lequel le diglycolamide répond à la formule : $R^1(R^2)N\text{-}C(O)\text{-}CH_2\text{-}O\text{-}CH_2\text{-}C(O)\text{-}N(R^3)R^4$ dans laquelle $R^1$ à $R^4$, qui peuvent être identiques ou différents, représentent des groupes alkyles, linéaires ou ramifiés, comprenant au moins 5 atomes de carbone et, mieux, encore au moins 8 atomes de carbone.

14. Procédé selon l'une quelconque des revendications 1, 5, 9 ou 13, dans lequel le diglycolamide est le N,N,N',N'-tétraoctyl-3-oxapentanediamide, le N,N,N',N'-tétra(2-éthylhexyl)-3-oxapentanediamide, le N,N,N',N'-tétradécyl-3-oxapentanediamide ou le N,N,N',N'-tétradodécyl-3-oxapentanediamide.

15. Procédé selon l'une quelconque des revendications 1, 5, 9, 13 ou 14, dans lequel la phase organique comprend de 0,05 mol/L à 1 mol/L de diglycolamide.

**Patentansprüche**

1. Verfahren zur selektiven Gewinnung zumindest eines Seltenerdmetalls TR1 mit einer Atomzahl von zumindest gleich 62 ausgehend von einer wässrigen sauren Phase A1, die aus der Behandlung von gebrauchten oder ausgesonderten Permanentmagneten stammt und ein oder mehrere Seltenerdmetall(e) TR1, Übergangsmetalle und eine Konzentration an starker Säure von 0,2 mol/l bis 6 mol/l enthält, wobei das Verfahren umfasst:

a) Extraktion des bzw. der Seltenerdmetalle TR1 aus der wässrigen Phase A1 durch Inkontaktbringen der wässrigen Phase A1 mit einer mit Wasser nicht mischbaren organischen Phase, enthaltend ein Diglycolamid mit einer Gesamtzahl an Kohlenstoffatomen von zumindest gleich 24 als Extraktionsmittel, in einem organischen Verdünnungsmittel, dann Trennen der wässrigen und der organischen Phase;
b) Waschen der aus Schritt a) erhaltenen organischen Phase durch Inkontaktbringen der organischen Phase mit einer wässrigen sauren Phase A2, die eine starke Säure enthält, die mit der starken Säure der wässrigen Phase A1 identisch ist, bei einer Konzentration von höchstens gleich der Konzentration an starker Säure der wässrigen Phase A1, dann Trennen der wässrigen und der organischen Phase; und
c) Reextraktion des bzw. der Seltenerdmetalle TR1 aus der aus Schritt b) erhaltenen organischen Phase durch Inkontaktbringen der organischen Phase mit einer wässrigen sauren Phase A3, die einen pH-Wert von zumindest gleich 3 aufweist, dann Trennen der wässrigen und der organischen Phase.

2. Verfahren nach Anspruch 1, wobei
die wässrige Phase A2 0,01 mol/l bis 0,5 mol/l starke Säure, vorzugsweise Salpetersäure, enthält, und/oder
die wässrige Phase A3 0,0001 mol/l bis 0,001 mol/l einer starken Säure, vorzugsweise Salpetersäure, enthält.

3. Verfahren nach Anspruch 1 oder Anspruch 2, das einen Zyklus umfasst, wobei der Zyklus die Schritte a), b), c) und eine Reinigung der aus Schritt c) stammenden organischen Phase umfasst.

4. Verfahren nach einem der Ansprüche 1 bis 3, wobei die wässrige Phase A1 aus der Behandlung von Permanentmagneten aus Neodym-Eisen-Bor in einer starken Säure stammt und das Seltenerdmetall TR1 Dysprosium ist.

5. Verfahren nach Anspruch 1, wobei die wässrige saure Phase A1 ferner ein oder mehrere Seltenerdmetalle TR2 mit einer Atomzahl von höchstens gleich 61 enthält, wobei das Verfahren ferner die selektive Gewinnung von zumindest einem Seltenerdmetall TR2 umfasst, wobei die Gewinnung die nachstehenden Schritte umfasst:

d) Extraktion des bzw. der Seltenerdmetalle TR2 aus der aus Schritt a) erhaltenen wässrigen Phase durch Inkontaktbringen der wässrigen Phase mit einer mit Wasser nicht mischbaren zweiten organischen Phase, enthaltend das gleiche Extraktionsmittel wie die erste organische Phase, in einem organischen Verdünnungsmittel, dann Trennen der wässrigen und der organischen Phase;
b) Waschen der aus Schritt d) erhaltenen organischen Phase durch Inkontaktbringen der organischen Phase mit einer wässrigen sauren Phase A4, die eine starke Säure enthält, die mit der starken Säure der wässrigen Phase A1 identisch ist, bei einer Konzentration von höchstens gleich der Konzentration an starker Säure der wässrigen Phase aus Schritt a), dann Trennen der wässrigen und der organischen Phase; und
f) Reextraktion des bzw. der Seltenerdmetalle TR2 aus der aus Schritt e) erhaltenen organischen Phase durch Inkontaktbringen der organischen Phase mit einer wässrigen sauren Phase A5, die einen pH-Wert von zumindest gleich 3 aufweist, dann Trennen der wässrigen und der organischen Phase.

6. Verfahren nach Anspruch 5, wobei
die wässrige Phase A2 0,01 mol/l bis 0,5 mol/l starke Säure, vorzugsweise Salpetersäure, enthält, und/oder
die wässrige Phase A4 0,2 mol/l bis 4 mol/l starke Säure, vorzugsweise Salpetersäure, enthält, und/oder
jede der wässrigen Phasen A3 und A5 0,0001 mol/l bis 0,001 mol/l starke Säure, vorzugsweise Salpetersäure, enthält.

7. Verfahren nach Anspruch 5 oder Anspruch 6, umfassend einen ersten und einen zweiten Zyklus, wobei der erste Zyklus die Schritte a), b) und c) umfasst, wobei der zweite Zyklus die Schritte d), e) und f) umfasst, wobei der erste und der zweite Zyklus ferner eine Reinigung einer organischen Phase, die aus der Vereinigung der aus den Schritten c) und f) stammenden organischen Phasen gebildet ist, und eine Teilung der so gereinigten organischen Phase in eine erste und eine zweite organische Phase, umfassen.

8. Verfahren nach einem der Ansprüche 5 bis 7, wobei die wässrige Phase A1 aus der Behandlung von Permanentmagneten aus Neodym-Eisen-Bor in einer starken Säure stammt, das Seltenerdmetall TR1 Dysprosium ist und die Seltenerdmetalle TR2 Praseodym und Neodym sind.

9. Verfahren zur selektiven Gewinnung von zumindest einem Seltenerdmetall TR1 mit einer Atomzahl von zumindest gleich 62 und von einem Seltenerdmetall TR2 mit einer Atomzahl von höchstens gleich 61 ausgehend einer wässrigen sauren Phase A1, die aus der Behandlung von gebrauchten oder ausgesonderten Permanentmagneten stammt und ein oder mehrere Seltenerdmetall(e) TR1 und ein oder mehrere Seltenerdmetall(e) TR2, Übergangsmetalle und eine Konzentration an starker Säure von 0,2 mol/l bis 6 mol/l enthält, wobei das Verfahren umfasst:

a) Extraktion des bzw. der Seltenerdmetalle TR1 und des bzw. der Seltenerdmetalle TR2 aus der wässrigen Phase A1 durch Inkontaktbringen der wässrigen Phase A1 mit einer mit Wasser nicht mischbaren organischen Phase, enthaltend ein Diglycolamid mit einer Gesamtzahl an Kohlenstoffatomen von zumindest gleich 24 als Extraktionsmittel, in einem organischen Verdünnungsmittel, dann Trennen der wässrigen und der organischen Phase;
b) Waschen der aus Schritt a) erhaltenen organischen Phase durch Inkontaktbringen der organischen Phase mit einer wässrigen sauren Phase A2, die eine starke Säure enthält, die mit der starken Säure der wässrigen Phase A1 identisch ist, bei einer Konzentration von höchstens gleich der Konzentration an starker Säure der wässrigen Phase A1, dann Trennen der wässrigen und der organischen Phase;

   b') Reextraktion des bzw. der Seltenerdmetalle TR2 aus der aus Schritt b) erhaltenen organischen Phase durch Inkontaktbringen der organischen Phase mit einer wässrigen sauren Phase A5, die einen pH-Wert von 1 bis 2,3 aufweist, dann Trennen der wässrigen und der organischen Phase;
   b") Waschen der aus Schritt b') erhaltenen wässrigen Phase durch Inkontaktbringen der wässrigen Phase mit einer mit Wasser nicht mischbaren zweiten organischen Phase, die das gleiche Extraktionsmittel wie die erste organische Phase enthält, in einem organischen Verdünnungsmittel, dann Trennen der wässrigen und der organischen Phase; und

   c) Reextraktion des bzw. der Seltenerdmetalle TR1 aus der aus Schritt b') erhaltenen organischen Phase durch Inkontaktbringen der organischen Phase mit einer wässrigen sauren Phase A3, die einen pH-Wert von zumindest gleich 3 aufweist, dann Trennen der wässrigen und der organischen Phase.

**10.** Verfahren nach Anspruch 9, wobei
   die wässrige Phase A2 0,2 mol/l bis 4 mol/l starke Säure, vorzugsweise Salpetersäure, enthält, und/oder
   die wässrige Phase A5 0,005 mol/l bis 0,1 mol/l einer starken Säure, vorzugsweise Salpetersäure, enthält, und/oder
   die wässrige Phase A3 0,0001 mol/l bis 0,001 mol/l einer starken Säure, vorzugsweise Salpetersäure, enthält.

**11.** Verfahren nach Anspruch 9 oder Anspruch 10, umfassend einen Zyklus, wobei der Zyklus die Schritte a), b), b'), b"), c), eine Reinigung der aus Schritt c) erhaltenden organischen Phase und eine Teilung der so gereinigten organischen Phase in eine erste und eine zweite organische Phase umfasst.

**12.** Verfahren nach einem der Ansprüche 9 bis 11, wobei die wässrige Phase A1 aus der Behandlung von Permanentmagneten aus Neodym-Eisen-Bor in einer starken Säure stammt, das Seltenerdmetall TR1 Dysprosium ist und die Seltenerdmetalle TR2 Praseodym und Neodym sind.

**13.** Verfahren nach einem der Ansprüche 1, 5 oder 9, wobei das Diglycolamid der folgenden Formel genügt: $R^1(R^2)N$-$C(O)$-$CH_2$-$O$-$CH_2$-$C(O)$-$N(R^3)R^4$, worin $R^1$ bis $R^4$, identisch oder verschieden, lineare oder verzweigte Alkylgruppen mit zumindest 5 Kohlenstoffatomen und besser mit zumindest 8 Kohlenstoffatomen darstellen.

**14.** Verfahren nach einem der Ansprüche 1, 5, 9 oder 13, wobei das Diglycolamid N,N,N',N'-Tetraoctyl-3-Oxapentandiamid, N,N,N',N'-Tetra(2-Ethylhexyl)-3-Oxapentandiamid, N,N,N',N'-Tetradecyl-3-Oxapentandiamid oder N,N,N',N'-Tetradodecyl-3-Oxapentandiamid ist.

**15.** Verfahren nach einem der Ansprüche 1, 5, 9, 13 oder 14, wobei die organische Phase 0,05 mol/l bis 1 mol/l Diglycolamid enthält.

**Claims**

**1.** Method for selective recovery of at least one rare earth metal TR1, with an atomic number at least equal to 62, from an acid aqueous phase A1 stemming from the processing of spent or scrapped permanent magnets and comprising one or more rare earth(s) TR1, transition metals and a strong acid concentration ranging from 0.2 mol/L to 6 mol/L, which method comprises:

   a) extracting the rare earth(s) TR1 from the aqueous phase A1, by contacting the aqueous phase A1 with an organic phase not miscible with water, which comprises a diglycolamide having a total number of carbon atoms at least equal to 24 as an extractant, in an organic diluent, and then separating the aqueous and organic phases;
   b) washing the organic phase obtained at the end of step a), by contacting the organic phase with an acid aqueous phase A2, which comprises a strong acid identical with the strong acid of the aqueous phase A1, at a concentration at most equal to the strong acid concentration of the aqueous phase A1, and then separating the aqueous and organic phases; and
   c) stripping the rare earth(s) TR1 from the organic phase obtained at the end of step b), by contacting the organic phase with an acid aqueous phase A3 which has a pH at least equal to 3, and then separating the aqueous and organic phases.

**2.** Method according to claim 1, wherein:

the aqueous phase A2 comprises from 0.01 mol/L to 0.5 mol/L of strong acid, preferably nitric acid, and/or
the aqueous phase A3 comprises from 0.0001 mol/L to 0.001 mol/L of a strong acid, preferably acid nitric.

3.  Method according to claim 1 or 2, which comprises a cycle, the cycle comprising steps a), b), c) and a purification of the organic phase stemming from step c).

4.  Method according to anyone of claims 1 to 3, wherein the aqueous phase A1 stems from the processing of Neodymium-Iron-Boron permanent magnets in a strong acid and the rare earth TR1 is dysprosium.

5.  Method according to claim 1, wherein the acid aqueous phase A1 further comprises one or more rare earth(s) TR2, with an atomic number at most equal to 61, and the method further comprises the selective recovery of at least one rare earth TR2, which recovery method comprises the following steps:

    d) extracting the rare earth(s) TR2 from the aqueous phase obtained at the end of step a), by contacting the aqueous phase with a second organic phase not miscible with water, which comprises the same extractant as the first organic phase, in an organic diluent, and then separating the aqueous and organic phases;
    e) washing the organic phase obtained at the end of step d), by contacting the organic phase with an acid aqueous phase A4, which comprises a strong acid identical with the strong acid of the aqueous phase A1, at a concentration at most equal to the strong acid concentration of the aqueous phase stemming from step a), and then separating the aqueous and organic phases; and
    f) stripping the rare earth(s) TR2 from the organic phase obtained at the end of step e), by contacting the organic phase with an acid aqueous phase A5 which has a pH at least equal to 3, and then separating the aqueous and organic phases.

6.  Method according to claim 5, wherein:

    the aqueous phase A2 comprises from 0.01 to 0.5 mol/L of strong acid, preferably nitric acid, and/or
    the aqueous phase A4 comprises from 0.2 mol/L to 4 mol/L of strong acid, preferably nitric acid, and/or
    each of the aqueous phases A3 and A5 comprises from 0.0001 mol/L to 0.001 mol/L of a strong acid, preferably nitric acid.

7.  Method according to claim 5 or claim 6, which comprises a first and a second cycle, the first cycle comprising steps a), b) and c), the second cycle comprising steps d), e) and f), the first and second cycles further comprising a purification of an organic phase formed by grouping the organic phases stemming from steps c) and f) and dividing the thereby purified organic phase into the first and second organic phases.

8.  Method according to anyone of claims 5 to 7, wherein the aqueous phase A1 stems from the processing of Neodymium-Iron-Boron permanent magnets in a strong acid, the rare earth TR1 is dysprosium and the rare earths TR2 are praseodymium and neodymium.

9.  Method for selectively recovering at least one rare earth TR1, with an atomic number at least equal to 62, and at least one rare earth TR2, with an atomic number at most equal to 61, from an acid aqueous phase A1 stemming from the processing of spent or scrapped permanent magnets and comprising one or more rare earth(s) TR1 and one or more rare earth(s) TR2, transition metals and a strong acid concentration ranging from 0.2 mol/L to 6 mol/L, which method comprises:

    a) extracting the rare earth(s) TR1 and the rare earth(s) TR2 from the aqueous phase A1, by contacting the aqueous phase A1 with a first organic phase not miscible with water, which comprises a diglycolamide having a total number of carbon atoms at least equal to 24 as an extractant, in an organic diluent, and then separating the aqueous and organic phases;
    b) washing the organic phase obtained at the end of step a), by contacting the organic phase with an acid aqueous phase A2, which comprises a strong acid identical with the strong acid of the aqueous phase A1, at a concentration at most equal to the strong acid concentration of the aqueous phase A1, and then separating the aqueous and organic phases;

    b') stripping the rare earth(s) TR2 from the organic phase obtained at the end of step b), by contacting the organic phase with an acid aqueous phase A5, which has a pH from 1 to 2.3, and then separating the aqueous and organic phases;

b") washing the aqueous phase obtained at the end of step b'), by contacting the aqueous phase with a second organic phase not miscible with water, which comprises the same extractant as the first organic phase, in an organic diluent, and then separating the aqueous and organic phases;

c) stripping the rare earth(s) TR1 from the organic phase obtained at the end of step b'), by contacting the organic phase with an acid aqueous phase A3 which has a pH at least equal to 3, and then separating the aqueous and organic phases.

**10.** Method according to claim 9, wherein:

the aqueous phase A2 comprises from 0.2 mol/L to 4 mol/L of strong acid, preferably nitric acid, and/or
the aqueous phase A5 comprises from 0.005 mol/L to 0.1 mol/L of a strong acid, preferably nitric acid, and/or
the aqueous phase A3 comprises from 0.0001 mol/L to 0.001 mol/L of a strong acid, preferably nitric acid.

**11.** Method according to claim 9 or claim 10, which comprises a cycle, the cycle comprising steps a), b), b'), b"), c), a purification of the organic phase stemming from step c) and a division of the thereby purified organic phase into the first and second organic phases.

**12.** Method according to anyone of claims 9 to 11, wherein the aqueous phase A1 stems from the processing of Neodymium-Iron-Boron permanent magnets in a strong acid, the rare earth TR1 is dysprosium and the rare earth(s) TR2 are praseodymium and neodymium.

**13.** Method according to anyone of claims 1, 5 or 9, wherein the diglycolamide fits the formula: $R^1(R^2)N-C(O)-CH_2-O-CH_2-C(O)-N(R^3)R^4$ wherein $R^1$ to $R^4$, which may be identical or different, represent linear or branched alkyl groups, comprising at least 5 carbon atoms and better still at least 8 carbon atoms.

**14.** Method according to anyone of claims 1, 5, 9 or 13, wherein the diglycolamide is *N,N,N',N'*-tetraoctyl-3-oxapentanediamide, *N,N,N',N'*-tetra(2-ethylhexyl)-3-oxapentanediamide, *N,N,N',N'*-tetradecyl-3-oxapentanediamide or *N,N,N',N'*-tetra-dodecyl-3-oxapentanediamide.

**15.** Method according to anyone of claims 1, 5, 9, 13 or 14, wherein the organic phase comprises from 0.05 mol/L to 1 mol/L of diglycolamide.

FIG. 1

FIG. 2

FIG. 3

EP 3 197 833 B1

FIG. 4A

FIG. 4B

FIG. 5

FIG. 6

**Phase organique**
[TODGA] = 0,2 M
[*n*-octanol] = 0,316 M
Débit = 0,1 L/h

1        7     1       7    1       5

Extraction Dy     Lavage Pr+Nd+éléments indésirables     Désextraction Dy

[Dy] = 0,009 mg/L
Fuite Dy =0,008%

**Phase aqueuse A1**
[HNO$_3$] = 5 M
[Dy] = 0,2 g/L
[Pr] = 2,7 g/L
[Nd] = 11 g/L
[Fe] = 31 g/L
Débit = 0,5 L/h

**Phase aqueuse A2**
[HNO$_3$] = 0,4 M
Débit = 0,38 L/h

**Phase aqueuse A3**
[HNO$_3$] = 0,001 M
Débit = 0,05 L/h

[Dy] = 2,0 g/L
[Pr] = 0,02 mg/L
[Nd] = 0,24 mg/L
%(Pr+Nd)/Dy = 0,01%
Pureté Dy = 99,9%

# FIG. 7A

FIG. 7B

EP 3 197 833 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• WO 2014064597 A

**Littérature non-brevet citée dans la description**

• **NARITA ; TANAKA.** *Solvent Extraction Research and Development,* 2013, vol. 20, 115-121

• **H. NARITA ; M. TANAKA.** *Solvent Extraction Research and Development,* 2013, vol. 20, 115-121